# EUROPEAN PATENT APPLICATION

(11) **EP 4 730 401 A1**
(43) Date of publication of application: **22.04.2026**
(21) Application number: 24883832.8
(22) Date of filing: 06.05.2024
(51) Int. Cl.: H01M 4/02, H01M 4/13, H01M 10/058

(54) **ELECTRODE ASSEMBLY, PROCESSING METHOD THEREFOR, BATTERY CELL, BATTERY, ELECTRICAL APPARATUS AND CUTTER ASSEMBLY**

(30) Priority: 31.10.2023 CN 202311439490
(71) Applicant: Contemporary Amperex Technology Co., Limited, Ningde, Fujian 352100 (CN)
(72) Inventor: HUANG, Biao, Ningde, Fujian 352100 (CN); YE, Zetao, Ningde, Fujian 352100 (CN)
(74) Representative: Kraus & Lederer PartGmbB
(86) International application number: PCT/CN2024/091270
(87) International publication number: WO 2025/091819

(57) **Abstract**

An electrode assembly, a processing method therefor, a battery cell, a battery, an electrical apparatus and a cutter assembly. The electrode assembly comprises an active substance-coated part and a tab part. The tab part comprises a plurality of tab pieces, overlapping parts of the plurality of tab pieces forming an overlapping region, and misaligned parts of the plurality of tab pieces forming a misalignment region connected to the overlapping region. The misalignment region comprises a first connection part and a second connection part, the side of the first connection part in a first direction being connected to the active substance-coated part, and the second connection part being connected to the other side of the first connection part in the first direction. In a second direction, the end of the second connection part away from the overlapping region is closer to the overlapping region than the end of the first connection part away from the overlapping region.

## Description

### CROSS-REFERENCE TO RELATED APPLICATION

The present application is presented based on Chinese Patent Application No. 202311439490.0 filed on October 31, 2023, and claims the priority to the Chinese Patent Application described above, the content of which is incorporated herein by reference in its entirety.

### TECHNICAL FIELD

The present application relates to the technical field of batteries, and in particular to, an electrode assembly and a processing method therefor, a battery cell, a battery, an electric device, and a cutting blade assembly.

### BACKGROUND

In recent years, new energy vehicles have developed by leaps and bounds. In the field of electric vehicles, batteries, as the power source of electric vehicles, play an irreplaceable and important role. Batteries, as core components of new energy vehicles, have high requirements in terms of both energy density and reliability, especially the reliability needs to be further improved.

### SUMMARY

The present application provides an electrode assembly and a processing method therefor, a battery cell, a battery, an electric device, and a cutting blade assembly. The electrode assembly has good reliability, and can improve the use reliability of the battery cell.

In a first aspect, embodiments of the present application provide an electrode assembly, which includes an active substance-coated part and a tab part. The tab part is connected to the active substance-coated part, the tab part includes a plurality of tab plates stacked and connected to each other, an overlapping portion of the plurality of tab plates forms an overlapping area, and misalignment portions of the plurality of tab plates form misalignment areas connected to the overlapping area; where the misalignment area includes a first connecting part and a second connecting part, one side of the first connecting part in a first direction is connected to the active substance-coated part, and the second connecting part is connected to the other side of the first connecting part in the first direction; and in a second direction, an end of the second connecting part distal to the overlapping area is closer to the overlapping area than an end of the first connecting part distal to the overlapping area, and the second direction intersects with the first direction.

In the above technical solutions, the misalignment area of the plurality of tab plates is provided to include the first connecting part and the second connecting part, and in the second direction, the end of the second connecting part distal to the overlapping area is closer to the overlapping area than the end of the first connecting part distal to the overlapping area, such that it is convenient to make the width of the tab part corresponding to the position of the second connecting part in the second direction smaller than the width of the tab part corresponding to the position of the first connecting part in the second direction. In this way, the misalignment area of the plurality of tab plates is fully utilized, the connection length between the tab part and the active substance-coated part is increased, and the electrical connection area and the connection reliability between the tab part and the active substance-coated part are improved, which is beneficial to improving the use reliability and the current passage capacity of the electrode assembly, thereby improving the use reliability of the battery cell. At the same time, the width of the misalignment area at the end portion of the tab part can be reduced. If the tab part needs to be disposed in a clearance part of other components in a penetrating manner (for example, the tab part is disposed in the perforation on the post terminal as described below in a penetrating manner), the interference between the tab part and other components such as the post terminal is reduced, which is beneficial to further improving the reliability of the battery cell, and is beneficial to saving the penetration space required by the tab part during the penetration operation. In this way, the penetration convenience of the tab part is improved, thereby improving the assembly convenience and the assembly efficiency of the battery cell.

In some embodiments, an edge at the end of the second connecting part distal to the overlapping area is of a saw-toothed structure; and/or, an edge at an end of the first connecting part distal to the active substance-coated part is of a saw-toothed structure.

In the above technical solutions, the edge at the end of the second connecting part distal to the overlapping area is provided to be of a saw-toothed structure, or the edge at the end of the first connecting part distal to the active substance-coated part is disposed to be of a saw-toothed structure, such that the length of burrs at the edge of the tab part can be controlled by controlling the width of the saw-toothed structure. Therefore, the problem of short-circuiting caused by the elongated burrs at the edge of the tab part falling into or extending into other positions can be alleviated to a certain extent, and the safety of the electrode assembly can be improved.

In some embodiments, the saw-toothed structure includes a plurality of protrusions sequentially disposed in the first direction, and a height h1 of the protrusion is ≤ 2 mm; and/or, a diameter d1 of a circumscribed circle of a projection of the protrusion in a thickness direction of the tab part is ≤ 2 mm.

In the above technical solutions, the height h1 of the protrusion is set to be ≤ 2 mm, and/or, the diameter d1 of the circumscribed circle of the projection of the protrusion in the thickness direction of the tab part is set to be ≤ 2 mm, such that the length of the burrs at the edge of the tab part can be effectively controlled. Even if the entire saw-toothed structure is folded, the risk of short-circuiting caused by the protrusions can be reduced.

In some embodiments, the saw-toothed structure includes a plurality of protrusions sequentially disposed in the first direction, and the protrusions are squares or trapezoids.

In the above technical solutions, the protrusions are provided to be squares or trapezoids, such that the shape of the protrusions is simplified and the processing is facilitated. At the same time, dimensions such as the height and the width of the protrusions are properly controlled, thereby further facilitating the control on the length of the burrs.

In some embodiments, when the edge of the second connecting part is formed with the saw-toothed structure, a first groove is formed in a position of the first connecting part connected to the edge at the end of the second connecting part distal to the overlapping area; or when the edge of the first connecting part is formed with the saw-toothed structure, a second groove is formed in a position of the second connecting part connected to the edge at the end of the first connecting part distal to the active substance-coated part.

In the above technical solutions, when the second connecting part is formed with a saw-toothed structure, a first groove is formed at an edge on the side of the first connecting part distal to the active substance-coated part, or when the first connecting part is formed with a saw-toothed structure, a second groove is formed at an edge on the side of the second connecting part distal to the overlapping area. The first groove or the second groove can be formed by cutting, which is beneficial to reducing the requirement for the position of the cutting blade in the first direction in the process of forming the first groove or the second groove by cutting, and can also hinder the cutting blade to a certain extent, which is beneficial to improving the cutting balance and accuracy.

In some embodiments, at least one of the edge at the end of the first connecting part distal to the active substance-coated part and the edge at the end of the second connecting part distal to the overlapping area is obtained by cutting.

In the above technical solutions, at least one of the edge at the end of the first connecting part distal to the active substance-coated part and the edge at the end of the second connecting part distal to the overlapping area is provided to be obtained by cutting, such that the length of the burrs at the edge of the tab part after the cutting and processing of the electrode assembly are completed can be effectively shortened, and the problem that elongated burrs are easily generated after the tab part is cut is effectively alleviated, thereby alleviating the problem of short-circuiting caused by the elongated burrs falling into or extending into other positions to a certain extent.

In some embodiments, two opposite sides of the overlapping area in the second direction are each provided with one of the misalignment areas.

In the above technical solutions, two opposite sides of the overlapping area in the second direction are each provided with one of the misalignment areas, such that it is beneficial to further increasing the connection length between the tab part and the active substance-coated part. Therefore, the electrical connection area and the connection reliability between the tab part and the active substance-coated part are further improved, thereby further improving the use reliability and the current passage capacity of the electrode assembly.

In some embodiments, the active substance-coated part includes a positive electrode plate body, a negative electrode plate body, and a separator. The plurality of tab plates are correspondingly connected to the positive electrode plate body and the negative-electrode plate body, separately, and the separator is disposed between the positive electrode plate body and the negative electrode plate body and extends beyond the positive electrode plate body and the negative electrode plate body; where at least a portion of the first connecting part is shielded by the separator.

In the above technical solutions, the separator is provided to extend beyond the positive electrode plate body and the negative electrode plate body to shield at least a portion of the first connecting part, such that the at least a portion of the first connecting part shielded by the separator can be insulated, so as to shorten the length of the first connecting part that can bypass the separator and extend into other positions to cause short-circuiting. Therefore, the safety of the electrode assembly is further improved.

In a second aspect, the embodiments of the present application provide a battery cell, which includes a housing, a post terminal, and the electrode assembly as described above. The post terminal is disposed on the housing, the active substance-coated part is accommodated in the housing, and the tab part is electrically connected to the post terminal.

In the above technical solutions, the battery cell adopts the electrode assembly described above, and the electrode assembly has good reliability and current passage capacity, which is beneficial to improving the charging and discharging capabilities and the reliability of the battery cell.

In some embodiments, an accommodating groove is formed in the post terminal, a portion of the tab part is accommodated in the accommodating groove, a side of the accommodating groove facing away from the active substance-coated part is open, a groove wall of a side of the accommodating groove facing the active substance-coated part is formed with a perforation communicating with an interior of the housing, and the tab part is disposed in the perforation in a penetrating manner.

In the above technical solutions, a portion of the tab is provided to be accommodated in the accommodating groove, which helps to increase the energy density of the battery cell, or helps to reduce the dimension of the battery cell in the case that the energy density of the battery cell remains unchanged, and also helps to reduce the structural complexity and the processing difficulty of the housing. In addition, the perforation can also help limit the movement of the tab part to a certain extent.

In some embodiments, the battery cell further includes a post terminal cover plate. The post terminal cover plate is disposed on the post terminal and closes an opening of the accommodating groove.

In the above technical solutions, the post terminal cover plate is provided to close the opening of the accommodating groove, such that the problem that an electrolyte in the housing leaks from the opening of the accommodating groove can be alleviated. In addition, because the post terminal cover plate closes the opening of the accommodating groove and is electrically connected to the post terminal, the post terminal cover plate is adopted to implement an electrical connection between the post terminal and the busbar component, which helps to increase the connection area at the electrical connection position and improve the current passage capacity.

In a third aspect, the embodiments of the present application provide a battery, which includes the battery cell as described above.

In the above technical solutions, the battery adopts the battery cell described above, and the battery cell has good charging and discharging capabilities and reliability, which is beneficial to improving the performance and the reliability of the battery.

In a fourth aspect, the embodiments of the present application provide an electric device, which includes the battery as described above. The battery is configured to provide electric energy.

In the above technical solutions, the electric device adopts the battery as described above, and the battery has good performance and reliability, which is beneficial to improving the use performance and the use reliability of the electric device.

In a fifth aspect, the embodiments of the present application provide a method for processing an electrode assembly. The method includes: stacking and partially misaligning a plurality of connecting sheets connected to an active substance-coated part, where the plurality of connecting sheets are provided with an overlapping portion and misalignment portions; dividing the misalignment portion into a cutting area and a non-cutting area, where the non-cutting area includes a first connecting part and a second connecting part connected to each other and separately connected to the overlapping portion, two sides of the first connecting part in a first direction are respectively connected to the active substance-coated part and the cutting area, two sides of the second connecting part in a second direction are respectively connected to the overlapping portion and the cutting area, and the second direction intersects with the first direction; and cutting off the cutting area such that remaining portions of the plurality of connecting sheets form a tab part of the electrode assembly.

In the above technical solutions, by dividing the misalignment portion of the plurality of connecting sheets into a cutting area and a non-cutting area, and allowing the cutting area to be connected to the side of the first connecting part distal to the active substance-coated part and the cutting area to be connected to the side of the second connecting part distal to the overlapping portion, after the cutting area is cut off, the remaining portions of the plurality of connecting sheets form a tab part of the electrode assembly, such that it is convenient to make the width of the end of the tab part distal to the active substance-coated part in the second direction smaller than the width of the end of the tab part connected to the active substance-coated part in the second direction. Therefore, the ability of the tab part to be inserted and disposed is improved and the assembly of the battery cell is facilitated on the premise of giving consideration to the current passage capacity and the use reliability of the electrode assembly.

In some embodiments, the misalignment portion is provided with a first cutting reference extending in the first direction and a second cutting reference extending in the second direction; the cutting area includes a plurality of first long-strip-shaped areas and a plurality of second long-strip-shaped areas, the plurality of first long-strip-shaped areas and the plurality of second long-strip-shaped areas are alternately disposed one by one in the first direction or the second direction, and the first long-strip-shaped area and the second long-strip-shaped area extend in the second direction or the first direction; and cutting off the cutting area includes: cutting off the plurality of first long-strip-shaped areas based on the first cutting reference and the second cutting reference; and cutting off the plurality of second long-strip-shaped areas based on the first cutting reference and the second cutting reference.

In the above technical solutions, for the cutting area, by first cutting off the plurality of first long-strip-shaped areas based on the first cutting reference and the second cutting reference, and then cutting off the plurality of second long-strip-shaped areas based on the first cutting reference and the second cutting reference, the cutting area can be cut off. At the same time, the cutting position of the cutting blade assembly during the cutting process is set based on the first cutting reference and the second cutting reference, which facilitates the effective control on the length of burrs at the position of the first cutting reference and the second cutting reference after the plurality of connecting sheets are cut. In this way, the problem that elongated burrs are easily generated after the plurality of connecting sheets are cut is alleviated, thereby alleviating the problem of short-circuiting caused by the elongated burrs falling into or extending into other positions to a certain extent.

In some embodiments, cutting off the plurality of first long-strip-shaped areas based on the first cutting reference and the second cutting reference includes: aligning two adjacent sides of a cutting blade assembly with the first cutting reference and the second cutting reference, respectively; and cutting off the plurality of second long-strip-shaped areas based on the first cutting reference and the second cutting reference includes: aligning edges of two adjacent sides of the cutting blade assembly with a first reference line and a second reference line, respectively, where the first reference line corresponds to an inner side of the cutting area and is away from the first cutting reference by a first predetermined value a, and the second reference line corresponds to an outer side of the cutting area and is away from the second cutting reference by a second predetermined value b.

In the above technical solutions, in the process of the cutting blade assembly cutting the plurality of second long-strip-shaped areas, the position of the cutting blade assembly is set such that the first side edge of the cutting blade assembly is aligned between the first reference line and the second reference line, or is aligned with the first reference line, and the second side edge of the cutting blade assembly is aligned with a third reference line, so as to achieve effective control on the length of burrs at the position of the first cutting reference and the second cutting reference.

In some embodiments, each second long-strip-shaped area includes a first sub-area and a second sub-area sequentially disposed in a length direction thereof. The second sub-area is located between the first cutting reference and the first reference line, a diameter d2 of a circumscribed circle of a projection of the second sub-area in a stacking direction is ≤ 2 mm, and the stacking direction is perpendicular to the first direction and the second direction, separately; and/or, a is ≤ 2 mm; and/or b is ≤ 2 mm.

In the above technical solutions, the diameter d2 of the circumscribed circle of the projection of the second sub-area in the third direction is set to be ≤ 2 mm, and/or, a is set to be ≤ 2 mm, and/or, b is set to be ≤ 2 mm, so as to effectively control the dimension of the portion of the second sub-area that remains on the member to be cut, that is, to effectively control the length of burrs after cutting. Even if the entire second sub-area remains on the member to be cut, the risk of short-circuiting caused by folding of the portion corresponding to the second sub-area can be reduced.

In a sixth aspect, the embodiments of the present application provide a cutting blade assembly. The cutting blade assembly is configured to cut a member to be cut to obtain an electrode assembly. The member to be cut includes an active substance-coated part and a part to be cut, and the part to be cut is connected to the active substance-coated part. The part to be cut includes a plurality of connecting sheets stacked and connected to each other, an overlapping portion of the plurality of connecting sheets forms an overlapping area, each of misalignment portions of the plurality of connecting sheets includes a cutting area and a non-cutting area, the non-cutting area includes a first connecting part and a second connecting part connected to each other and separately connected to the overlapping portion, two sides of the first connecting part in a first direction are respectively connected to the active substance-coated part and the cutting area, and the second direction intersects with the first direction. The cutting blade assembly includes: a first cutter, where the first cutter includes a plurality of first blades spaced apart from each other in the first direction, and each first blade extends in the second direction; the first cutter is configured to cut off at least a portion of the cutting area to enable remaining portions of the plurality of connecting sheets to form a tab part, such that the tab part and the active substance-coated part form the electrode assembly.

In the above technical solutions, the first cutter is provided to include a plurality of first blades spaced apart from each other, the first cutter is configured to cut at least a portion of the cutting area, and the cutting blade assembly is configured to cut off the cutting area, such that in the second direction, the end of the second connecting part distal to the overlapping area is closer to the overlapping area than the end of the first connecting part distal to the overlapping area. In this way, the penetration convenience of the tab part is improved, and the connection area between the tab part and the active substance-coated part is increased, thereby facilitating both the improvement of the assembly efficiency of the battery cell and the improvement of the current passage capacity.

In some embodiments, the cutting area includes a plurality of first long-strip-shaped areas and a plurality of second long-strip-shaped areas. The plurality of first long-strip-shaped areas and the plurality of second long-strip-shaped areas are alternately disposed one by one in the first direction, and the first long-strip-shaped areas and the second long-strip-shaped areas extend in the second direction. The first blade is configured to cut off the first long-strip-shaped area and the second long-strip-shaped area successively to form the tab part. The first blade includes a first cutting part and a first serrated part sequentially disposed in the second direction, and the first serrated parts of the plurality of first blades are located at the same ends of the plurality of first blades in the second direction.

In the above technical solutions, the first blade is provided to include the first cutting part and the first serrated part, the plurality of first serrated parts are located at the same ends of the plurality of first blades, and the ends of the plurality of first cutting parts distal to the first serrated parts are fixedly connected, so as to achieve the synchronous cutting of the plurality of first long-strip-shaped areas by the plurality of first blades and the synchronous cutting of the plurality of second long-strip-shaped areas by the at least one first blade. In this way, the cutting of the entire cutting area can be facilitated by the first cutter, and the structure of the cutting blade assembly can be simplified.

In some embodiments, a length y1 of the first serrated part in the second direction is ≤ 2 mm; and/or, a distance x3 between two adjacent first serrated parts is ≤ 2 mm.

In the above technical solutions, the distance x3 between two adjacent first serrated parts is set to be ≤ 2 mm, and/or, the length y1 of the first serrated part in the second direction is set to be ≤ 2 mm, such that when the cutting blade assembly cuts the plurality of second long-strip-shaped areas, an appropriate cutting position can be selected based on a previous cutting position of the first serrated part. However, the distance x3 between two adjacent first serrated parts and the length y1 of the first serrated part in the second direction both affect the dimension of the portion of the second long-strip-shaped area remaining on the member to be cut, so as to achieve effective control on the dimension of the portion of the second long-strip-shaped area remaining on the member to be cut. Therefore, the length of the burrs generated after the cutting blade assembly cuts the cutting area is effectively controlled, and the length of the burrs can be controlled within a reasonable range, thereby further improving the reliability and the safety of the product.

In some embodiments, the first serrated part is a triangle, and the maximum thickness t1 of the first blade is ≤ 1 mm; or the first serrated part is a square, and the maximum thickness t2 of the first blade is ≤ 0.71 mm; or the first serrated part is a trapezoid, and the maximum thickness t3 of the first blade is ≤ 1 mm.

In the above technical solutions, the maximum thickness of the first blade is set when the first serrated part has different shape structures, such that the thickness of the first blade well matches the shape of the first serrated part. In this way, the first blade has a proper cutting capability, and the cutting reliability and the accuracy of controlling the cutting dimension of the first blade are improved.

In some embodiments, the cutting area includes a plurality of first long-strip-shaped areas and a plurality of second long-strip-shaped areas. The plurality of first long-strip-shaped areas and the plurality of second long-strip-shaped areas are alternately disposed one by one in the first direction, and the first long-strip-shaped areas and the second long-strip-shaped areas extend in the second direction. The first cutter is configured to cut the plurality of first long-strip-shaped areas. The cutting blade assembly further includes: a second cutter. The second cutter includes at least one second blade extending in the first direction, and the second cutter is configured to cut the plurality of second long-strip-shaped areas.

In the above technical solutions, the cutting blade assembly is provided to further include a second cutter, and the first cutter and the second cutter separately cut different areas of the cutting area, such that the cutting control of the first cutter and the second cutter can be simplified. In this way, it is convenient for the first cutter to keep the same posture for cutting and the second cutter to keep the same posture for cutting. Then, the first blade extends in a certain fixed direction, the second blade extends in a certain fixed direction, and the extending direction of the first blade intersects with the extending direction of the second blade. In this case, there is no need to frequently adjust the placement postures of the first cutter and the second cutter when cutting, and only the corresponding cutters need to be replaced, which facilitates the simplification of the cutting process.

In some embodiments, the second cutter includes two blade sets. Each blade set includes at least one second blade, a plurality of second blades spaced apart from each other in the second direction, and the two blade sets are respectively configured to cut the second long-strip-shaped areas on two sides of the overlapping area in the second direction.

In the above technical solutions, the second cutter is provided to include two blade sets and be respectively configured to cut the second long-strip-shaped areas on two sides of the overlapping area in the second direction. In this case, the two blade sets are respectively configured to cut the cutting areas on two sides of the overlapping area in the second direction, so as to synchronously cut the cutting areas on two sides of the overlapping area, thereby improving the processing efficiency of the electrode assembly.

In some embodiments, the distance between the two blade sets is adjustable.

In the above technical solutions, by setting the distance between the two blade sets to be adjustable, it is convenient for the second cutter to adapt to the different distances between the plurality of cutting areas, i.e., to the tab parts of different dimensions, when cutting the two cutting areas simultaneously, no matter for the same member to be cut or for different members to be cut, so as to improve the operability and applicability of the second cutter in cutting the two cutting areas simultaneously.

### BRIEF DESCRIPTION OF THE DRAWINGS

The above and/or additional aspects and advantages of the present application will become apparent and readily understood from the description of embodiments in conjunction with the drawings below, in which:
FIG. 1 is a schematic structural diagram of a vehicle according to some embodiments of the present application;
FIG. 2 is an exploded view of the structure of a battery according to some embodiments of the present application;
FIG. 3 is a schematic structural diagram of a battery cell according to some embodiments of the present application;
FIG. 4 is a cross-sectional view of the battery cell shown in FIG. 3;
FIG. 5 is a schematic diagram of an electrode assembly according to some embodiments of the present application;
FIG. 6 is a partial schematic diagram of the electrode assembly shown in FIG. 5;
FIG. 7 is a schematic diagram of a plurality of tab plates of the tab part shown in FIG. 6;
FIG. 8 is a schematic structural diagram (a schematic diagram of stacking a plurality of connecting sheets) before cutting according to some embodiments of the present application;
FIG. 9 is a schematic diagram of the plurality of connecting sheets shown in FIG. 8 cut by a first cutter;
FIG. 10 is a schematic diagram of the plurality of connecting sheets shown in FIG. 9 cut by a first cutter;
FIG. 11 is a schematic diagram of the plurality of connecting sheets shown in FIG. 10 cut by a second cutter, and the structure shown in FIG. 6 is obtained after the connecting sheets are cut by the second cutter;
FIG. 12 is a schematic diagram of cutting tabs according to some embodiments of the present application;
FIG. 13 is a schematic diagram of a processing method according to some embodiments of the present application;
FIG. 14 is a schematic diagram of a processing method according to some embodiments of the present application;
FIG. 15 is a schematic diagram of a processing method according to some embodiments of the present application;
FIG. 16 is a schematic diagram of a cutting blade assembly according to some embodiments of the present application;
FIG. 17 is a partial schematic diagram of a first blade shown in FIG. 16;
FIG. 18 is a schematic diagram of a cutting blade assembly according to some embodiments of the present application;
FIG. 19 is a schematic diagram of a cutting blade assembly according to some embodiments of the present application;
FIG. 20 is a schematic diagram of various embodiments of a cutting blade assembly according to some embodiments of the present application; and
FIG. 21 is a partial schematic diagram of a second blade shown in FIG. 20(c).

Reference numerals:
electric device 1000, controller 300, motor 400, battery 200, battery cell 100, case 101, first case 1011, second case 1012, cutting device 500, cutting blade assembly 10, first reference line L1, second reference line L2, third reference line L3, first cutter 11, first blade 111, first cutting part 1111, first serrated part 1112, second cutter 12, second blade 121, second cutting part 1211, second serrated part 1212, post terminal 20, accommodating groove 20a, perforation 20b, electrode assembly 30, active substance-coated part 31, tab part 32, protrusion 32a, saw-toothed structure 32b, tab plate 320, overlapping area 321, misalignment area 322, first groove 3220, first connecting part 3221, second connecting part 3222, connecting sheet 33, overlapping portion 331, misalignment portion 332, cutting area 3321, non-cutting area 3322, housing 40, first cutting reference 5a, second cutting reference 5b, first long-strip-shaped area 51, second long-strip-shaped area 52, first sub-area 521, second sub-area 522, post terminal cover plate 60.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are typically divided into three types: cylindrical battery cells, prismatic battery cells, and pouch battery cells. This is also not limited in the embodiments of the present application.

The battery mentioned in the embodiments of the present application refers to a single physical module including a plurality of battery cells to provide higher voltage and capacity. For example, the battery mentioned in the present application may be a battery module, a battery pack, or the like. A battery module generally includes a plurality of battery cells. The battery generally includes a case for encapsulating a plurality of battery cells or a plurality of battery modules, and the case can prevent liquid or other foreign matters from affecting the charging or discharging of the battery cells. Certainly, the battery may alternatively not include a case.

Illustratively, a battery cell may typically include a housing, a battery cell assembly, and an electrolyte. The housing is configured to accommodate the battery cell assembly and the electrolyte, and at least one positive electrode post terminal and at least one negative electrode post terminal are disposed on the housing. The battery cell assembly includes one or a plurality of electrode assemblies, and the electrode assembly is formed by stacking or winding a positive electrode plate, a negative electrode plate, and a separator.

The positive electrode plate may typically include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab plate, and a plurality of positive electrode tab plates are stacked together and electrically connected to the positive electrode post terminal. Illustratively, the plurality of positive electrode tab plates stacked together may be directly welded to the positive electrode post terminal to form an electrical connection. Alternatively, the battery cell assembly may further include a positive electrode adapting piece, the plurality of positive electrode tab plates stacked together are welded to one end of the positive electrode adapting piece, and the other end of the positive electrode adapting piece is welded to the positive electrode post terminal to form an electrical connection between the positive electrode tab plates and the positive electrode post terminal.

The negative electrode plate may typically include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab plate, and a plurality of negative electrode tab plates are stacked together and electrically connected to the negative electrode post terminal. Illustratively, the plurality of negative electrode tab plates stacked together may be directly welded to the negative electrode post terminal to form an electrical connection. Alternatively, the battery cell assembly may further include a negative electrode adapting piece, the plurality of negative electrode tab plates stacked together are welded to one end of the negative electrode adapting piece, and the other end of the negative electrode adapting piece is welded to the negative electrode post terminal to form an electrical connection between the negative electrode tab plates and the negative electrode post terminal. The material of the separator is not limited, and may be, e.g., polypropylene or polyethylene.

As for a pressure relief structure on the battery cell mentioned in the present application, when the internal pressure of the battery cell is too high (for example, due to overcharging and other reasons), the pressure relief structure is configured to release the gas inside the battery cell to reduce the internal pressure of the battery cell and prevent the battery cell from explosion and combustion due to excessively rapid pressurization inside the battery cell. For example, the pressure relief structure may be an anti-explosion valve, an anti-explosion sheet, or the like.

In recent years, new energy vehicles have developed by leaps and bounds. In the field of electric vehicles, batteries, as the power source of electric vehicles, play an irreplaceable and important role. Batteries, as core components of new energy vehicles, have high requirements in terms of both energy density and reliability.

In the related art, a battery includes a plurality of battery cells. In some cases, in order to facilitate the connection between the tab part and the post terminal of the battery cell, the tab part often needs to pass through a clearance part (e.g., a through hole) of other components (post terminals). However, the tab part is formed by stacking tab plates, the stacking position of the tab plates can form a weld mark, and the misalignment positions of the tab plates exhibit a loose structure, such that the uncompacted tab part easily interferes with other components when passing through the clearance part of the other components, thus affecting the reliability of the battery cell.

Based on the above consideration, in order to improve the reliability of a battery cell, an electrode assembly is provided. The electrode assembly includes an active substance-coated part and a tab part connected to the active substance-coated part. The tab part includes a plurality of tab plates stacked and connected to each other, an overlapping portion of the plurality of tab plates forms an overlapping area, and misalignment portions of the plurality of tab plates form misalignment areas connected to the overlapping area. The misalignment area includes a first connecting part and a second connecting part, where the first connecting part is connected to the active substance-coated part on one side in a first direction, and the second connecting part is connected to the first connecting part on the other side in the first direction; and in a second direction, the end of the second connecting part distal to the overlapping area is closer to the overlapping area than the end of the first connecting part distal to the overlapping area, and the second direction intersects with the first direction.

In the above technical solutions, the misalignment area of the plurality of tab plates is provided to include the first connecting part and the second connecting part. In the second direction, the end of the second connecting part distal to the overlapping area is closer to the overlapping area than the end of the first connecting part distal to the overlapping area, such that it is convenient to make the width of the tab part corresponding to the position of the second connecting part in the second direction smaller than the width of the tab part corresponding to the position of the first connecting part in the second direction. In this way, the misalignment area of the plurality of tab plates is fully utilized, the connection length between the tab part and the active substance-coated part is increased, and the electrical connection area and the connection reliability between the tab part and the active substance-coated part are improved, which is beneficial to improving the use reliability and the current passage capacity of the electrode assembly, thereby improving the use reliability of the battery cell. At the same time, the width of the misalignment area at the end portion of the tab part can be reduced. If the tab part needs to be disposed in a clearance part of other components in a penetrating manner (for example, the tab part is disposed in the perforation on the post terminal as described below in a penetrating manner), the interference between the tab part and other components such as the post terminal is reduced, which is beneficial to further improving the reliability of the battery cell, and is beneficial to saving the penetration space required by the tab part during the penetration operation. In this way, the penetration convenience of the tab part is improved, thereby improving the assembly convenience and the assembly efficiency of the battery cell.

The embodiments of the present application provide an electric device using the battery disclosed herein as a power source. The electric device may be, but is not limited to, a mobile phone, a tablet or laptop computer, an electric toy, an electric tool, an electric bike, an electric vehicle, a ship, a spacecraft, and the like. The electric toy may include a stationary or mobile electric toy, such as a game console, an electric car toy, an electric ship toy, and an electric aircraft toy; the spacecraft may include an airplane, a rocket, a space shuttle, a spaceship, and the like; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of explanation in the following embodiments, the structures of the electric device 1000, the battery 200, and the battery cell 100 of the present application are described in detail by taking the electric device 1000 as a vehicle as an example.

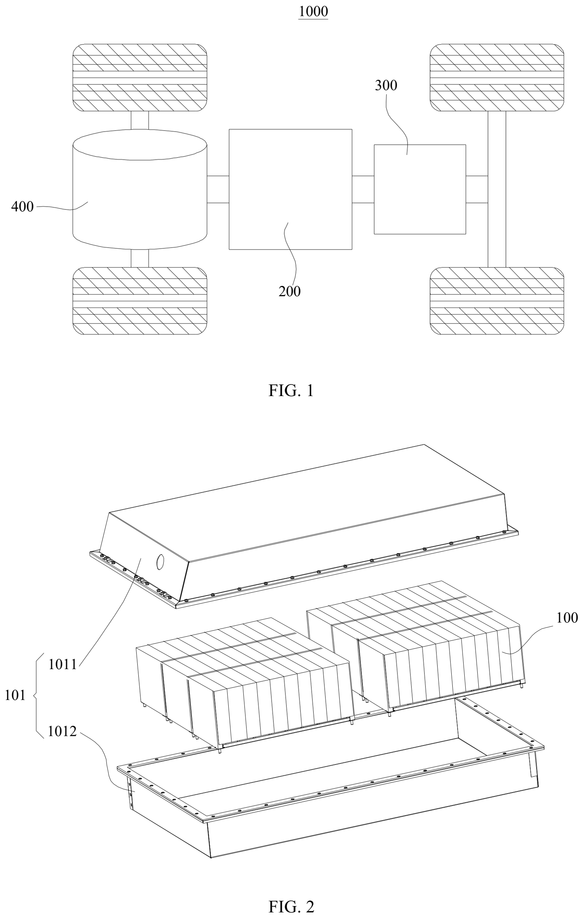

Referring to FIG. 1, FIG. 1 is a schematic structural diagram of a vehicle as an electric device 1000 according to some embodiments of the present application. The vehicle may be a fuel vehicle, a gas vehicle, or a new energy vehicle. The new energy vehicle may be a pure electric vehicle, a hybrid vehicle, an extended-range vehicle, or the like. A battery 200 is disposed in the vehicle, and the battery 200 may be disposed at the bottom, head, or tail of the vehicle. The battery 200 may be configured to supply power to the vehicle. For example, the battery 200 may serve as an operation power source for the vehicle. The vehicle may further include a controller 300 and a motor 400. The controller 300 is configured to control the battery 200 to supply power to the motor 400, e.g., for operation power needed by the vehicle for start-up, navigation, and driving. In some embodiments of the present application, the battery 200 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of the structure of a battery cell 100 used in the battery 200 according to some embodiments of the present application. The battery 200 includes a case 101 and a plurality of battery cells 100, and the battery cells 100 are accommodated in the case 101. The case 101 is configured to provide an assembly space for the battery cells 100, and the case 101 may be in various structures. In some embodiments, the case 101 may include a first case 1011 and a second case 1012. The first case 1011 and the second case 1012 are lidded with each other. The first case 1011 and the second case 1012 jointly define the accommodating cavity for accommodating the battery cells 100. The second case 1012 may be of a hollow structure with one end open, the first case 1011 may be of a plate structure, and the first case 1011 lids the open side of the second case 1012, such that the first case 1011 and the second case 1012 jointly define an accommodating cavity; or both the first case 1011 and the second case 1012 may be of hollow structures with one side open (for example, as shown in FIG. 2), and the open side of the first case 1011 lids the open side of the second case 1012. Certainly, the case 101 formed by the first case 1011 and the second case 1012 may be in various shapes, such as a cylinder or a rectangular parallelepiped.

In the battery 200, the plurality of battery cells 100 may be connected in series, in parallel, or in series-parallel. The series-parallel connection means that both series connection and parallel connection are present for the connection among the plurality of battery cells 100. The plurality of battery cells 100 may be directly connected in series, in parallel, or in series-parallel, and then the whole formed by the plurality of battery cells 100 is accommodated in the case 101. Certainly, the battery 200 may also be in a form where the plurality of battery cells 100 are first connected in series, in parallel, or in series-parallel to give a battery module, and then a plurality of battery modules are connected in series, in parallel, or in series-parallel to form an integral structure and accommodated in the case 101. The battery 200 may further include other structures. For example, the battery 200 may further include a busbar for achieving the electrical connection between the plurality of battery cells 100.

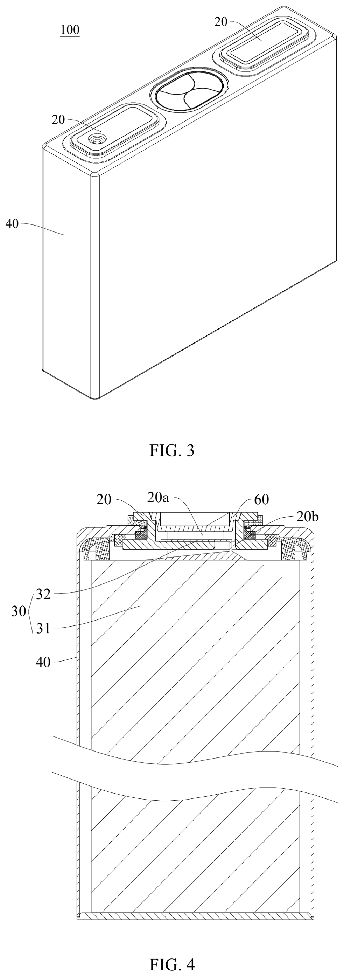

Referring to FIGs. 3 and 4, in the embodiments of the present application, the battery cell 100 includes a housing 40, a post terminal 20, and an electrode assembly 30. The post terminal 20 is disposed in the housing 40. The electrode assembly 30 includes an active substance-coated part 31 disposed in the housing 40 and a tab part 32 connected to the active substance-coated part 31. The tab part 32 is electrically connected to the post terminal 20. Illustratively, an accommodating cavity is formed in the housing 40, and the active substance-coated part 31 is accommodated in the accommodating cavity. The post terminal 20 is disposed in the housing 40 in a penetrating manner. The tab part 32 is directly welded to the post terminal 20 or connected to the post terminal through an adapting piece, such that the tab part 32 is electrically connected between the active substance-coated part 31 and the post terminal 20. Illustratively, a portion of the positive electrode plate that is provided with a positive electrode active substance layer (denoted as a positive electrode plate body), a separator, and a portion of the negative electrode plate that is provided with a negative electrode active substance layer (denoted as a negative electrode plate body) are sequentially stacked, and the active substance-coated part 31 is formed by winding, stacking, or the like.

The active substance-coated part 31 is divided into a positive electrode active substance-coated part and a negative electrode active substance-coated part. The positive electrode active substance-coated part includes a portion in which the positive electrode current collector is coated with a positive electrode active substance layer, and the negative electrode active substance-coated part includes a portion in which the negative electrode current collector is coated with a negative electrode active substance layer. The positive electrode tab part is electrically connected to the positive electrode active substance-coated part and the positive electrode post terminal. The negative electrode tab part is electrically connected to the negative electrode active substance-coated part and the negative electrode post terminal.

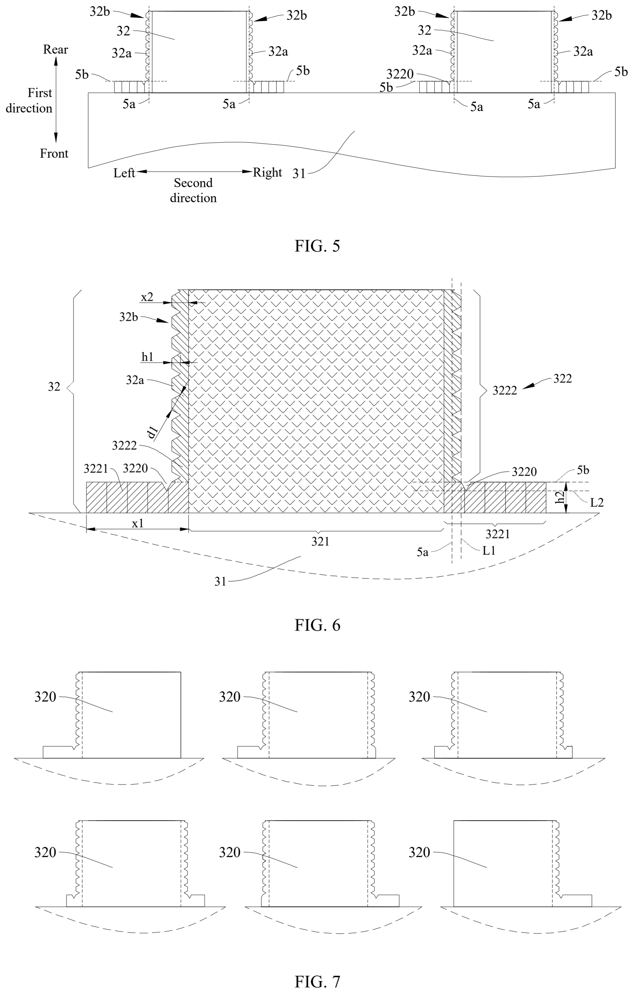

Referring to FIGs. 5-7, according to the electrode assembly 30 of some embodiments of the present application, the tab part 32 includes a plurality of tab plates 320. The plurality of tab plates 320 are stacked and connected to each other, an overlapping portion of the plurality of tab plates 320 forms an overlapping area 321, misalignment portions of the plurality of tab plates 320 form misalignment areas 322, and the misalignment areas 322 are connected to the overlapping area 321.

It can be understood that, after the plurality of tab plates 320 are stacked, there are misalignment areas 322 in the plurality of tab plates 320. The misalignment area 322 can be understood as an area where the number of tab plates 320 stacked in this area is less than the number of all tab plates 320 of the tab part 32. The overlapping area 321 can be understood as an area where the number of tab plates 320 of the stacking device in this area is equal to the number of all tab plates 320 of the tab part 32. In other words, along the thickness direction of the tab part 32, a portion of the plurality of tab plates 320 whose projections completely overlap corresponds to the overlapping area 321, and a portion of the plurality of tab plates 320 whose projections do not completely overlap corresponds to the misalignment area 322. For example, as shown in FIG. 6, the cross-hatched area indicates the overlapping area 321, and the single-hatched area indicates the misalignment area 322.

The misalignment area 322 includes a first connecting part 3221 and a second connecting part 3222. One side of the first connecting part 3221 in the first direction is connected to the active substance-coated part 31, and the second connecting part 3222 is connected to the other side of the first connecting part 3221 in the first direction, and in this case, the second connecting part 3222 is connected to one side of the first connecting part 3221 distal to the active substance-coated part 31 in the first direction. In the second direction, an end of the second connecting part 3222 distal to the overlapping area 321 is closer to the overlapping area 321 than an end of the first connecting part 3221 distal to the overlapping area 321, and the second direction intersects with the first direction.

It can be seen that, in the above technical solutions, the misalignment area 322 may be located on one side of the overlapping area 321 in the second direction, the first connecting part 3221 and the second connecting part 3222 are sequentially disposed in the first direction, and in the second direction, a distance between an end of the second connecting part 3222 distal to the overlapping area 321 and the overlapping area 321 is x2, and a distance between an end of the first connecting part 3221 distal to the overlapping area 321 and the overlapping area 321 is x1, where x2 < x1. In this case, it is convenient to make the width of the tab part 32 corresponding to the position of the second connecting part 3222 in the second direction smaller than the width of the tab part 32 corresponding to the position of the first connecting part 3221 in the second direction. Therefore, the tab part 32 may include a first portion and a second portion connected to each other in the first direction, where the first portion may include a portion of the overlapping area 321 and the first connecting part 3221, and the second portion may include another portion of the overlapping area 321 and the second connecting part 3222; and in the second direction, the width of the second portion is smaller than the width of the first portion.

Since the second portion is connected to the active substance-coated part 31, the misalignment area 322 of the plurality of tab plates 320 can be fully utilized to increase the connection length between the tab part 32 and the active substance-coated part 31, thereby improving the electrical connection area and the connection reliability between the tab part 32 and the active substance-coated part 31. This facilitates the improvement of the use reliability and the current passage capacity of the electrode assembly 30, thereby improving the use reliability of the battery cell 100. When the electrode assembly 30 is used in the battery cell 100, if the tab part 32 needs to be disposed in a clearance part of other components in a penetrating manner (for example, the tab part 32 is disposed in the perforation 20b on the post terminal 20 described below in a penetrating manner), the width of the second portion is relatively small, which is beneficial to saving the penetration space required by the tab part 32 during the penetration operation. In this way, the penetration convenience of the tab part 32 is improved, the interference between the tab part 32 and the post terminal 20 is reduced, and the reliability of the battery cell 100 is improved, and meanwhile, the assembly convenience and the assembly efficiency of the battery cell 100 can also be improved.

Illustratively, the second direction is perpendicular to the first direction. Taking an example in which the first direction is a front-rear direction and the second direction is a left-right direction, a misalignment area 322 is disposed on the left side of the overlapping area 321, and the misalignment area 322 includes a first connecting part 3221 and a second connecting part 3222 sequentially connected in the front-rear direction. The front side of the first connecting part 3221 is connected to the active substance-coated part 31, the rear side of the first connecting part 3221 is connected to the second connecting part 3222, and the right side of the first connecting part 3221 and the right side of the second connecting part 3222 are both connected to the overlapping area 321. In the left-right direction, the distance between the left end of the second connecting part 3222 and the overlapping area 321 is smaller than the distance between the left end of the first connecting part 3221 and the overlapping area 321. It should be noted that the front-rear direction and the left-right direction corresponding to the first direction and the second direction described above are only for the purpose of convenience of description, and are not the corresponding directions of the electrode assembly 30 and the battery cell 100 during manufacturing, usage, or other cases. Certainly, in other examples, the second direction may also be at any included angle other than a right angle with the first direction.

Referring to FIGs. 5 and 6, in some embodiments, an edge at the end of the second connecting part 3222 distal to the overlapping area 321 is of a saw-toothed structure 32b; and/or, an edge at an end of the first connecting part 3221 distal to the active substance-coated part 31 is of a saw-toothed structure 32b.

In the above technical solutions, the edge at the end of the second connecting part 3222 distal to the overlapping area 321 is provided to be of a saw-toothed structure 32b, or the edge at the end of the first connecting part 3221 distal to the active substance-coated part 31 is disposed to be of a saw-toothed structure 32b, such that the length of burrs at the edge of the tab part 32 can be controlled by controlling the width of the saw-toothed structure 32b. Therefore, the problem of short-circuiting caused by the elongated burrs at the edge of the tab part 32 falling into or extending into other positions can be alleviated to a certain extent, and the safety of the electrode assembly 30 can be improved.

Referring to FIG. 6, in some embodiments, the saw-toothed structure 32b includes a plurality of protrusions 32a sequentially disposed in the first direction. The height h1 of the protrusion 32a is ≤ 2 mm; and/or, the diameter d1 of the circumscribed circle of the projection of the protrusion 32a in the thickness direction of the tab part 32 is ≤ 2 mm.

For example, h1 is 1 mm, 1.2 mm, 1.5 mm, 2 mm, or the like; d1 is 1 mm, 1.4 mm, 1.73 mm, 2 mm, or the like.

In the above technical solutions, the height h1 of the protrusion 32a is set to be ≤ 2 mm, and/or, the diameter d1 of the circumscribed circle of the projection of the protrusion 32a in the thickness direction of the tab part 32 is set to be ≤ 2 mm, such that the length of the burrs at the edge of the tab part 32 can be effectively controlled. Even if the entire saw-toothed structure 32b is folded, the risk of short-circuiting caused by the protrusions 32a can be reduced. The height of the protrusion 32a can be understood as the height of the protrusion 32a in the second direction.

Illustratively, when d1 is ≤ 2 mm, it can be achieved by reasonably setting the height and/or the width of the protrusion 32a. For example, the protrusion 32a is a trapezoid, the width of the protrusion 32a is less than or equal to 1.73 mm, and the height thereof is less than or equal to 2 mm.

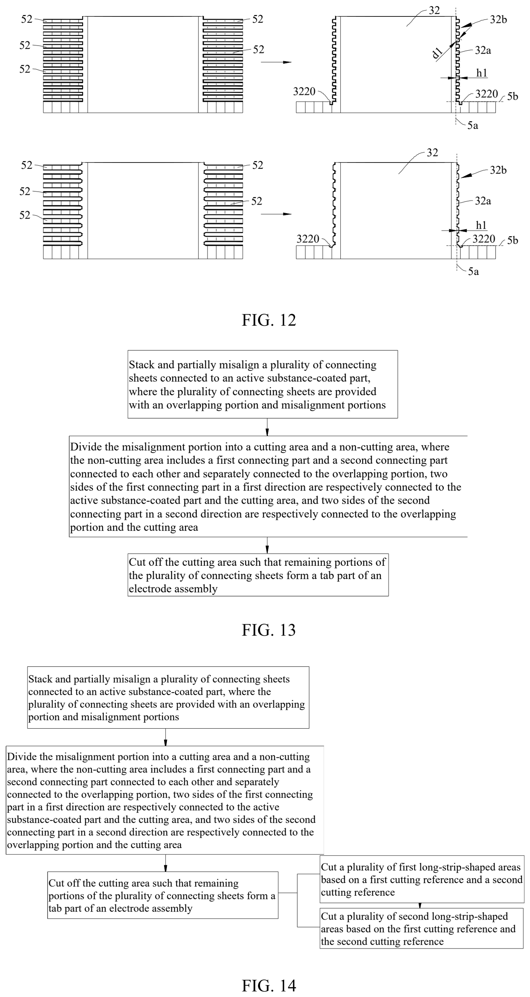

It can be understood that, in the embodiments of the present application, the plurality of protrusions 32a of the saw-toothed structure 32b may be spaced apart from each other (as shown in FIG. 12), or the plurality of protrusions 32a may be disposed in a zero-spacing manner (as shown in FIG. 6).

Referring to the figures, in some embodiments, the saw-toothed structure 32b includes a plurality of protrusions 32a sequentially disposed in a first direction, and the protrusion 32a is a square or a trapezoid.

In the above technical solutions, the protrusions 32a are provided to be squares or trapezoids, such that the shape of the protrusions 32a is simplified and the processing is facilitated. At the same time, dimensions such as the height and the width of the protrusions 32a are properly controlled, thereby further facilitating the control on the length of the burrs.

Referring to FIG. 6, in some embodiments, when the edge of the second connecting part 3222 is formed with the saw-toothed structure 32b, a first groove 3220 is formed in a position of the first connecting part 3221 connected to the edge at the end of the second connecting part 3222 distal to the overlapping area 321. In this case, the first groove 3220 may be located at an edge on one side of the first connecting part 3221 distal to the active substance-coated part 31, and the first groove 3220 is disposed adjacent to the second connecting part 3222.

In the above technical solutions, when the second connecting part 3222 is formed with the saw-toothed structure 32b, the first groove 3220 is formed in the edge on the side of the first connecting part 3221 distal to the active substance-coated part 31, and the first groove 3220 may be formed by cutting. This helps to reduce the requirement for the position of the cutting blade in the first direction in the process of forming the first groove 3220 by cutting, and can also hinder the cutting blade to a certain extent, which is beneficial to improving the cutting balance and accuracy.

It can be understood that, in the second direction, the first groove 3220 and the second connecting part 3222 may be spaced apart from each other, or the first groove 3220 and the second connecting part 3222 may be disposed in a zero-spacing manner (as shown in FIG. 6). For example, the radius of the circumscribed circle of the projection of the edge of the first groove 3220 in the thickness direction of the tab part 32 may be less than or equal to 2 mm, so as to further effectively control the length of the burrs at the edge of the tab part 32. Even if the portion at the first groove 3220 is completely folded, the risk of short-circuiting can be reduced.

For example, the first groove 3220 may be a triangular groove (as shown in FIG. 6), a square groove (as shown in FIG. 12), a trapezoidal groove (as shown in FIG. 12), or the like.

Illustratively, when the cutting blade assembly 10 is configured to cut to form the tab part 32, and when the first cutter 11 is configured to cut the plurality of second long-strip-shaped areas 52, the first groove 3220 may be formed by cutting of the free end (for example, at least a portion of the first serrated part 1112) of the first blade 111. When the second cutter 12 is configured to cut the plurality of second long-strip-shaped areas 52, the first groove 3220 may be formed by cutting of the free end (for example, at least a portion of the second serrated part 1212) of the second blade 121. The depth of the first groove 3220 may also correspond to the distance between the second reference line L2 and the second cutting reference 5b, which is described below, that is, the second predetermined value b.

In other embodiments, when the edge of the first connecting part 3221 is formed with the saw-toothed structure 32b, a second groove is formed in a position of the second connecting part 3222 connected to the edge at the end of the first connecting part 3221 distal to the active substance-coated part 31. In this case, the second groove may be located at an edge on the side of the second connecting part 3222 distal to the overlapping area 321, and the second groove is disposed adjacent to the first connecting part 3221.

In the above technical solutions, when the first connecting part 3221 is formed with the saw-toothed structure 32b, the second groove is formed in the edge on the side of the second connecting part 3222 distal to the overlapping area 321, and the second groove may be formed by cutting. This helps to reduce the requirement for the position of the cutting blade in the second direction in the process of forming the second groove by cutting, and can also hinder the cutting blade to a certain extent, which is beneficial to improving the cutting balance and accuracy.

It can be understood that, in the first direction, the second groove and the first connecting part 3221 may be spaced apart from each other, or the second groove and the first connecting part 3221 may be disposed in a zero-spacing manner. For example, the radius of the circumscribed circle of the projection of the edge of the second groove in the thickness direction of the tab part 32 may be less than or equal to 2 mm, so as to further effectively control the length of the burrs at the edge of the tab part 32. Even if the portion at the second groove is completely folded, the risk of short-circuiting can be reduced.

Illustratively, the second groove may be a triangular groove, a square groove, a trapezoidal groove, or the like.

In some other embodiments, the first groove 3220 is not formed on the first connecting part 3221, and the second groove is not formed on the second connecting part 3222 either.

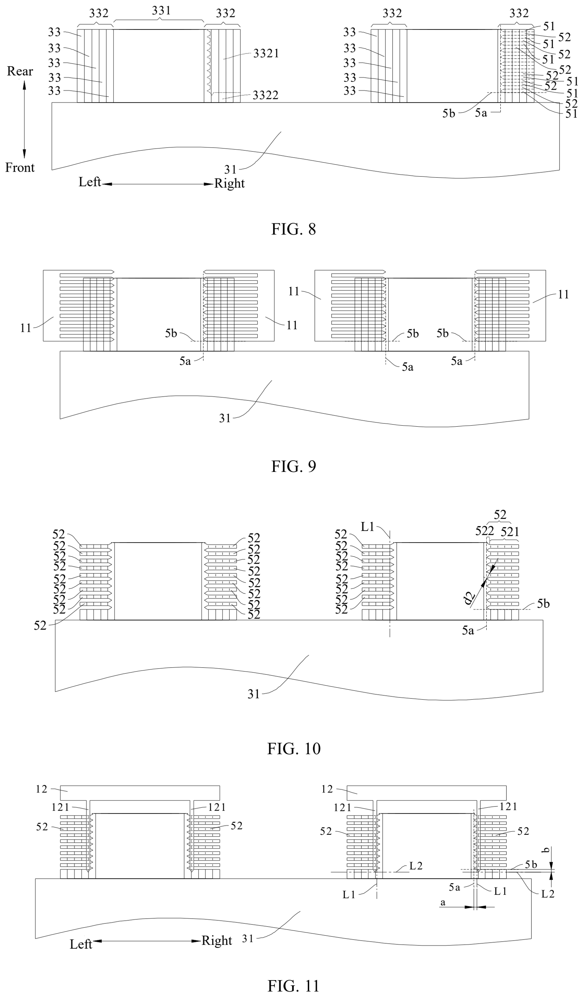

Referring to FIG. 6 and in combination with FIGs. 8-11, in some embodiments, at least one of the edge at the end of the first connecting part 3221 distal to the active substance-coated part 31 and the edge at the end of the second connecting part 3222 distal to the overlapping area 321 is obtained by cutting, and in this case, at least one of the edge at the end of the first connecting part 3221 distal to the active substance-coated part 31 and the edge at the end of the second connecting part 3222 distal to the overlapping area 321 is configured as a cut edge. In other words, the edge at the end of the first connecting part 3221 distal to the active substance-coated part 31 and/or the edge at the end of the second connecting part 3222 distal to the overlapping area 321 is formed after the cutting operation.

It can be seen that, if the edge at the end of the first connecting part 3221 distal to the active substance-coated part 31 is obtained by cutting, before the cutting operation, the edge at the end of the first connecting part 3221 distal to the active substance-coated part 31 is connected to a cut-off area (for example, the cutting area 3321 described below). If the edge at the end of the second connecting part 3222 distal to the overlapping area 321 is obtained by cutting, before the cutting operation, the edge at the end of the second connecting part 3222 distal to the overlapping area 321 is connected to a cut-off area (for example, the cutting area 3321 described below).

It can be understood that the edge at the end of the first connecting part 3221 distal to the active substance-coated part 31 and the edge at the end of the second connecting part 3222 distal to the overlapping area 321 may be obtained either in a single cutting operation or in separate cutting operations.

In the above technical solutions, the edge at the end of the first connecting part 3221 distal to the active substance-coated part 31 and/or the edge at the end of the second connecting part 3222 distal to the overlapping area 321 is provided to be obtained by cutting, such that the length of the burrs at the edge of the tab part 32 after the cutting and processing of the electrode assembly 30 are completed can be effectively shortened, and the problem that elongated burrs are easily generated after the tab part 32 is cut is effectively alleviated, thereby alleviating the problem of short-circuiting caused by the elongated burrs falling into or extending into other positions to a certain extent.

For example, the edge at the end of the second connecting part 3222 distal to the overlapping area 321 is of a saw-toothed structure 32b, the saw-toothed structure 32b is configured as a cut edge, and the edge on the side of the first connecting part 3221 facing away from the active substance-coated part 31 is also configured as a cut edge. In this case, if the first groove 3220 is formed in a position of the first connecting part 3221 connected to the edge at the end of the second connecting part 3222 distal to the overlapping area 321, an edge corresponding to the second groove is also configured as a cut edge.

Referring to FIG. 6, in some embodiments, two opposite sides of the overlapping area 321 in the second direction are each provided with one of the misalignment areas 322, and in this case, each misalignment area 322 includes a first connecting part 3221 and a second connecting part 3222, and for each misalignment area 322, the first connecting part 3221 is connected to the active substance-coated part 31, and the distance between the end of the second connecting part 3222 distal to the overlapping area 321 and the overlapping area 321 is smaller than the distance between the end of the first connecting part 3221 distal to the overlapping area 321 and the overlapping area 321, such that the width of the tab part 32 at a position corresponding to the second connecting part 3222 in the second direction is smaller than the width of the tab part 32 at a position corresponding to the first connecting part 3221 in the second direction.

Illustratively, the misalignment areas 322 on both sides of the overlapping area 321 in the second direction may be disposed facing towards each other in the second direction, and in this case, the first connecting parts 3221 of the two misalignment areas 322 may be disposed facing towards each other in the second direction, and the first connecting parts 3221 of the two misalignment areas 322 may be disposed facing towards each other in the second direction; for example, the misalignment areas 322 on both sides of the overlapping area 321 may be symmetrically disposed, and certainly, the misalignment areas 322 on both sides of the overlapping area 321 may also be asymmetrically disposed.

In the above technical solutions, two opposite sides of the overlapping area 321 in the second direction are each provided with one of the misalignment areas 322, such that it is beneficial to further increasing the connection length between the tab part 32 and the active substance-coated part 31. Therefore, the electrical connection area and the connection reliability between the tab part 32 and the active substance-coated part 31 are further improved, thereby further improving the use reliability and the current passage capacity of the electrode assembly 30.

For example, two opposite sides of the overlapping area 321 in the second direction are each provided with one of the misalignment areas 322, each misalignment area 322 includes a first connecting part 3221 and a second connecting part 3222, an edge at an end of each second connecting part 3222 distal to the overlapping area 321 is of a saw-toothed structure 32b, and a first groove 3220 is formed at an edge on a side of each first connecting part 3221 distal to the active substance-coated part 31; or an edge at an end of each first connecting part 3221 distal to the active substance-coated part 31 is of a saw-toothed structure 32b, and a second groove is formed at an edge on a side of each second connecting part 3222 distal to the overlapping area 321. Alternatively, in one misalignment area 322, an edge at an end of the first connecting part 3221 distal to the active substance-coated part 31 is of a saw-toothed structure 32b, and a second groove is formed at an edge on a side of the second connecting part 3222 distal to the overlapping area 321; and in the other misalignment area 322, an edge at an end of the second connecting part 3222 distal to the overlapping area 321 is of a saw-toothed structure 32b, and a first groove 3220 is formed at an edge on a side of the first connecting part 3221 distal to the active substance-coated part 31.

Referring to FIG. 6, in some embodiments, the active substance-coated part 31 includes a positive electrode plate body, a negative electrode plate body, and a separator. The plurality of tab plates 320 are separately connected to the positive electrode plate body and the negative electrode plate body, correspondingly. The separator is disposed between the positive electrode plate body and the negative electrode plate body, and the separator extends beyond the positive electrode plate body and the negative electrode plate body. At least a portion of the first connecting part 3221 is shielded by the separator, and the portion of the separator that extends beyond the positive electrode plate body and the negative electrode plate body shields at least a portion of the first connecting part 3221.

It can be seen that, in the above technical solutions, the tab plate 320 connected to the positive electrode plate body may form a positive electrode tab plate, and the tab plate 320 connected to the negative electrode plate body may form a negative electrode tab plate. In the first direction, the portion of the separator that extends beyond the positive electrode plate body may shield at least a portion of the first connecting part 3221 of the positive electrode tab plate, and the portion of the separator that extends beyond the negative electrode plate body may shield at least a portion of the first connecting part 3221 of the negative electrode tab plate.

In the above technical solutions, the separator is provided to extend beyond the positive electrode plate body and the negative electrode plate body to shield at least a portion of the first connecting part 3221, such that at least a portion of the first connecting part 3221 shielded by the separator can be insulated. In this way, the length of the first connecting part 3221 that can bypass the separator and extend into other positions to cause short-circuiting can be shortened, thereby further improving the safety of the electrode assembly 30.

For example, the separator shields the entire first connecting part 3221 to enhance the insulation arrangement for the first connecting part 3221, and even if a portion of the first connecting part 3221 is folded, the short-circuiting problem can also be alleviated. For another example, the separator shields a portion of the first connecting part 3221, and in this case, the width of the portion of the first connecting part 3221 exposed to the outside of the separator in the first direction may be less than or equal to 2 mm, but is not limited thereto.

In some embodiments, the width h2 of the first connecting part 3221 in the first direction is > 1 mm. For example, h2 may be 1.2 mm, 1.5 mm, 1.8 mm, 2 mm, 2.5 mm, or the like. Further, h2 is > 2 mm.

In the above technical solutions, the width h2 of the first connecting part 3221 is set to be > 1 mm, such that the distance between the cutting area 3321 and the current collector is greater than 1 mm when the tab part 32 is cut, which can alleviate the problem that the portions of other components (such as the separator) of the electrode assembly that extend beyond the positive electrode plate body and the negative electrode plate body are punched off together during the cutting process.

In a second aspect, the embodiments of the present application provide a battery cell 100, which includes a housing 40, a post terminal 20, and the electrode assembly 30 as described above. The post terminal 20 is disposed on the housing 40, the active substance-coated part 31 is accommodated in the housing 40, and the tab part 32 is electrically connected to the post terminal 20.

In the above technical solutions, the battery cell 100 adopts the electrode assembly 30 described above, and the electrode assembly 30 has good reliability and current passage capacity, which is beneficial to improving the charging and discharging capacity and the reliability of the battery cell 100.

For example, the tab part 32 is directly electrically connected to the post terminal 20, or the tab part 32 is indirectly electrically connected to the post terminal 20 through an adapting piece.

Referring to FIG. 4, in some embodiments, the post terminal 20 is formed with an accommodating groove 20a, and a portion of the tab part 32 is accommodated in the accommodating groove 20a, such that a portion of the tab part 32 can occupy the space in the accommodating groove 20a, thereby reducing the space occupied by the tab part 32 in the housing 40 and saving the space in the housing 40 to accommodate a larger volume of the active substance-coated part 31, which is beneficial to increasing the energy density of the battery cell 100, or reducing the dimension of the battery cell 100 in the case that the energy density of the battery cell 100 is unchanged.

The side of the accommodating groove 20a facing away from the active substance-coated part 31 is open, and a groove wall on the side of the accommodating groove 20a facing the active substance-coated part 31 is provided with a perforation 20b that communicates with the interior of the housing 40. In this case, the perforation 20b may pass through a groove wall on a side of the accommodating groove 20a proximal to the active substance-coated part 31, the perforation 20b communicates with the accommodating groove 20a and the internal space of the housing 40, and the tab part 32 is disposed in the perforation 20b in a penetrating manner.

As such, when the electrolyte is injected into the battery cell 100, the electrolyte may be injected into the accommodating groove 20a and then flow toward the housing 40 through the perforation 20b, where the accommodating groove 20a can serve as a buffer for the electrolyte, thereby mitigating issues such as electrolyte splashing and overflow. In addition, the side wall of the accommodating groove 20a (that is, a groove wall extending from the opening of the accommodating groove 20a toward the active substance-coated part 31) can prevent the electrolyte from splashing out to some extent, thereby reducing contamination caused by the electrolyte to the outside and facilitating fast electrolyte injection. In addition, because no separate liquid injection channel needs to be formed on the housing 40, special processing of the housing 40 is unnecessary, which helps to reduce the structural complexity and processing difficulty of the housing 40. In addition, the perforation 20b can also help limit the movement of the tab part 32 to a certain extent.

It can be seen that, during the assembly of the battery cell 100, during the process of providing the tab part 32 in the perforation 20b in a penetrating manner, the end of the second connecting part 3222 distal to the first connecting part 3221 and the end of the overlapping area 321 distal to the active substance-coated part 31 extend into the perforation 20b first. Since the width of the second connecting part 3222 in the second direction is relatively smaller than the width of the first connecting part 3221, the width of the end of the tab part 32 distal to the active substance-coated part 31 in the second direction is smaller than the width of the end of the tab part 32 proximal to the active substance-coated part 31 in the second direction, thereby improving the penetration convenience of the tab part 32.

It can be understood that there may be one or more perforations 20b, and the tab part 32 may be disposed in at least one of the perforations 20b in a penetrating manner. For example, at least one of the perforations 20b is able to pass through the electrolyte, and at least one of the perforations 20b is vacant (i.e., the tab part 32 is not perforated), so that the electrolyte can pass through the perforation without being hindered by the tab part 32. For another example, after the tab part 32 is perforated, the electrolyte can still pass through at least one of the perforations 20b.

Illustratively, the portion of the tab part 32 accommodated in the accommodating groove 20a is welded to the post terminal 20 to form an electrical connection, thereby enabling current output from the electrode assembly 30 through the post terminal 20. If the side of the accommodating groove 20a facing away from the active substance-coated part 31 is open, the tab part 32 is welded to the groove wall on the side of the accommodating groove 20a proximal to the active substance-coated part 31, thereby improving the fitting compactness and facilitating the welding operation of the two parts. Certainly, the position of the electrical connection between the tab part 32 and the post terminal 20 is not limited thereto. For example, the portion of the tab part 32 that is disposed in the perforation 20b in a penetrating manner is welded to the post terminal 20 to form an electrical connection. In other examples, the tab part 32 may also be provided to be welded to the post terminal cover plate 60 described below to form an electrical connection, which is not limited here.

Referring to FIG. 4, in some embodiments, the battery cell 100 further includes a post terminal cover plate 60. The post terminal cover plate 60 is disposed on the post terminal 20 and closes the opening of the accommodating groove 20a.

In the above technical solutions, the post terminal cover plate 60 is provided to close the opening of the accommodating groove 20a, such that the problem that an electrolyte in the housing 40 leaks from the opening of the accommodating groove 20a can be alleviated. In addition, because the post terminal cover plate 60 closes the opening of the accommodating groove 20a and is electrically connected to the post terminal 20, the post terminal cover plate 60 is adopted to implement an electrical connection between the post terminal 20 and the busbar component, which helps to increase the connection area at the electrical connection position and improve the current passage capacity.

For example, a liquid injection hole that may communicate with the accommodating groove 20a is formed in the post terminal cover plate 60, and the battery cell 100 further includes a sealing structure configured to block the liquid injection hole; or a sealing member is disposed at the perforation 20b to alleviate the problem of electrolyte leakage from the perforation.

In a third aspect, the embodiments of the present application provide a battery 200, which includes the battery cell 100 as described above.

In the above technical solutions, the battery adopts the battery cell 100 described above, and the battery cell 100 has good charging and discharging capabilities and reliability, which is beneficial to improving the performance and the reliability of the battery 200.

In a fourth aspect, the embodiments of the present application provide an electric device 1000, which includes the battery 200 described above. The battery 200 is configured to provide electric energy.

In the above technical solutions, the electric device 1000 adopts the battery 200 as described above, and the battery 200 has good performance and reliability, which is beneficial to improving the use performance and the use reliability of the electric device 1000.

In a fifth aspect, the embodiments of the present application provide a method for processing an electrode assembly 30. As shown in FIGs. 13-15, the method includes: stacking and partially misaligning a plurality of connecting sheets 33 connected to the active substance-coated part 31, where the plurality of connecting sheets 33 are provided with an overlapping portion 331 and misalignment portions 332; dividing the misalignment portion 332 into a cutting area 3321 and a non-cutting area 3322, where the non-cutting area 3322 includes a first connecting part 3221 and a second connecting part 3222 connected to each other and separately connected to the overlapping portion, two sides of the first connecting part 3221 in a first direction are respectively connected to the active substance-coated part 31 and the cutting area 3321, two sides of the second connecting part 3222 in a second direction are respectively connected to the overlapping portion 331 and the cutting area 3321, and the second direction intersects with the first direction; and cutting off the cutting area 3321 such that remaining portions of the plurality of connecting sheets 33 form the tab part 32 of the electrode assembly 30.

Certainly, after the plurality of connecting sheets 33 are cut as described above, the remaining portion of each connecting sheet 33 forms the tab plate 320. In this case, the misalignment portion 332 corresponds to the misalignment area 322 described above, and the overlapping portion 331 corresponds to the overlapping area 321 described above.

It can be seen that in the above technical solutions, in the first direction, the first connecting part 3221 is located between the cutting area 3321 and the active substance-coated part 31; in the second direction, the second connecting part 3222 is located between the cutting area 3321 and the overlapping portion 331; and in the second direction, the end of the second connecting part 3222 distal to the overlapping area 321 is closer to the overlapping area 321 than the end of the first connecting part 3221 distal to the overlapping area 321.

It can be understood that, after the plurality of connecting sheets 33 are stacked, there are misalignment portions 332 in the plurality of connecting sheets 33. The misalignment portion 332 can be understood as a portion in which the number of connecting sheets 33 stacked in the portion is less than the number of all connecting sheets 33. The overlapping portion 331 can be understood as a portion in which the number of connecting sheets 33 of the stacking device in the portion is equal to the number of all connecting sheets 33. In other words, along the stacking direction, a portion of the plurality of connecting sheets 33 whose projections completely overlap corresponds to the overlapping portion 331, and a portion of the plurality of connecting sheets 33 whose projections do not completely overlap corresponds to the misalignment portion 332.

In the above technical solutions, by dividing the misalignment portion of the plurality of connecting sheets 33 into a cutting area 3321 and a non-cutting area 3322, and allowing the cutting area 3321 to be connected to the side of the first connecting part 3221 distal to the active substance-coated part 31 and the cutting area 3321 to be connected to the side of the second connecting part 3222 distal to the overlapping portion, after the cutting area 3321 is cut off, the remaining portions of the plurality of connecting sheets 33 form the tab part 32 of the electrode assembly 30, such that it is convenient to make the width of the end of the tab part 32 distal to the active substance-coated part 31 in the second direction smaller than the width of the end of the tab part 32 connected to the active substance-coated part 31 in the second direction. Therefore, the ability of the tab part 32 to be inserted and disposed is improved and the assembly of the battery cell 100 is facilitated on the premise of giving consideration to the current passage capacity and the use reliability of the electrode assembly 30.

Referring to FIGs. 5 and 8-11, in some embodiments, the misalignment portion 332 is provided with a first cutting reference 5a extending in the first direction and a second cutting reference 5b extending in the second direction; the cutting area 3321 includes a plurality of first long-strip-shaped areas 51 and a plurality of second long-strip-shaped areas 52, the plurality of first long-strip-shaped areas 51 and the plurality of second long-strip-shaped areas 52 are alternately disposed one by one in the first direction or the second direction, and the first long-strip-shaped area 51 and the second long-strip-shaped area 52 extend in the second direction or the first direction. It can be seen that the cutting area 3321 has the following two different arrangements: 1, the plurality of first long-strip-shaped areas 51 and the plurality of second long-strip-shaped areas 52 are alternately disposed one by one in the first direction, and the first long-strip-shaped areas 51 and the second long-strip-shaped areas 52 extend in the second direction; 2, the plurality of first long-strip-shaped areas 51 and the plurality of second long-strip-shaped areas 52 are alternately disposed one by one in the second direction, and the first long-strip-shaped areas 51 and the second long-strip-shaped areas 52 extend in the first direction.

Cutting off the cutting area 3321 includes: cutting off the plurality of first long-strip-shaped areas 51 based on the first cutting reference 5a and the second cutting reference 5b; and cutting off the plurality of second long-strip-shaped areas 52 based on the first cutting reference 5a and the second cutting reference 5b.

It can be seen that in the above cutting process, no matter whether the first long-strip-shaped area 51 is cut or the second long-strip-shaped area 52 is cut, the cutting position is based on the first cutting reference 5a and the second cutting reference 5b.

In the above technical solutions, for the cutting area 3321, by first cutting off the plurality of first long-strip-shaped areas 51 based on the first cutting reference 5a and the second cutting reference 5b, and then cutting off the plurality of second long-strip-shaped areas 52 based on the first cutting reference 5a and the second cutting reference 5b, the cutting area 3321 can be cut off. At the same time, the cutting position of the cutting blade assembly 10 during the cutting process is set based on the first cutting reference 5a and the second cutting reference 5b, which facilitates the effective control on the length of burrs at the position of the first cutting reference 5a and the second cutting reference 5b after the plurality of connecting sheets 33 are cut. In this way, the problem that elongated burrs are easily generated after the plurality of connecting sheets 33 are cut is alleviated, thereby alleviating the problem of short-circuiting caused by the elongated burrs falling into or extending into other positions to a certain extent.

For example, the cutter adopted for cutting off the plurality of first long-strip-shaped areas 51 and the cutter adopted for cutting off the plurality of second long-strip-shaped areas 52 may be the same cutter or different cutters.

In some embodiments, the cutting blade assembly 10 includes a first cutter 11, where the first cutter 11 includes a plurality of first blades 111 spaced apart from each other. The cutting method includes: cutting the plurality of first long-strip-shaped areas 51 respectively with the plurality of first blades 111, and cutting the plurality of second long-strip-shaped areas 52 with at least one first blade 111 located at an edge of the first cutter 11.

For example, each first long-strip-shaped area 51 is cut off by a corresponding first blade 111. During the cutting process, a width side of one of the plurality of first blades 111 on the outermost side in the first direction may be aligned with the second cutting reference 5b, and end portions of the plurality of first blades 111 in the second direction may be aligned with the first cutting reference 5a. After the plurality of first long-strip-shaped areas 51 are cut off, the width side of one of the plurality of first blades 111 on the outermost side may be cut by taking the first cutting reference 5a as a reference, so as to cut the plurality of second long-strip-shaped areas 52 simultaneously. Certainly, during the process of performing the above-mentioned two cutting operations by the first cutter 11, the arrangement posture of the first cutter 11 is changed. During the process of cutting the plurality of first long-strip-shaped areas 51, one end of the length of the first blade 111 may be aligned with the first cutting reference 5a. During the process of cutting the plurality of second long-strip-shaped areas 52, one end of the length of the first blade 111 may take the second cutting reference 5b as a reference.

In the above technical solutions, cutting of the plurality of first long-strip-shaped areas 51 and the plurality of second long-strip-shaped areas 52 can be achieved by the first cutter 11, which facilitates the simplification of the structure of the cutting blade assembly 10 on the premise of shortening the length of the burrs at the position of the cutting reference of the cutting area 3321.

Referring to FIGs. 8-11, in some embodiments, the cutting blade assembly 10 includes a first cutter 11 and a second cutter 12, where the first cutter 11 includes a plurality of first blades 111 spaced apart from each other, and the second cutter 12 includes at least one second blade 121. The cutting method includes: cutting the plurality of first long-strip-shaped areas 51 respectively with the plurality of first blades 111, and cutting the plurality of second long-strip-shaped areas 52 with the at least one second blade 121.

For example, each first long-strip-shaped area 51 is cut off by a corresponding first blade 111. During the cutting process, a width side of one of the plurality of first blades 111 on the outermost side in the first direction may be aligned with the second cutting reference 5b, and end portions of the plurality of first blades 111 in the second direction may be aligned with the first cutting reference 5a. After the plurality of first long-strip-shaped areas 51 are cut, the width side of the second blade 121 on the outermost side of the second cutter 12 may be cut by taking the first cutting reference 5a as a reference, so as to cut the plurality of second long-strip-shaped areas 52 simultaneously. Certainly, during the process of cutting the plurality of first long-strip-shaped areas 51, one end of the length of the first blade 111 may be aligned with the first cutting reference 5a. During the process of cutting the plurality of second long-strip-shaped areas 52, one end of the length of the second blade 121 may take the second cutting reference 5b as a reference.

In the above technical solutions, the cutting of the plurality of first long-strip-shaped areas 51 is achieved by the first cutter 11, and the cutting of the plurality of second long-strip-shaped areas 52 is achieved by the second cutter 12. In this way, the cutting arrangement posture of the first cutter 11 and the cutting arrangement posture of the second cutter 12 do not need to be adjusted frequently, which is advantageous for simplifying the cutting procedure.

It can be understood that when the second cutter 12 includes one second blade 121, the second blade 121 may be aligned with the first cutting reference 5a to perform cutting; and when the second cutter 12 includes a plurality of second blades 121, the plurality of second blades 121 may be spaced apart from each other in the second direction, and the first blade 111 on the outermost side of the plurality of second blades 121 is aligned with the first cutting reference 5a to perform cutting.

Referring to FIGs. 8-11, in some embodiments, cutting the plurality of first long-strip-shaped areas 51 based on the first cutting reference 5a and the second cutting reference 5b includes: aligning two adjacent sides of the cutting blade assembly 10 with the first cutting reference 5a and the second cutting reference 5b, respectively.

Cutting the plurality of second long-strip-shaped areas 52 based on the first cutting reference 5a and the second cutting reference 5b includes: aligning two adjacent sides of the cutting blade assembly 10 with a first reference line L1 and a second reference line L2, respectively, where the first reference line L1 corresponds to an inner side of the cutting area 3321 and is away from the first cutting reference 5a by a first predetermined value a, and the second reference line L2 corresponds to an outer side of the cutting area 3321 and is away from the second cutting reference 5b by a second predetermined value b.

It can be seen that the cutting blade assembly 10 may cut off a portion of each second long-strip-shaped area 52, and the remaining portion of each second long-strip-shaped area 52 corresponds to the burrs at the position of the first cutting reference 5a. In addition, after the plurality of first long-strip-shaped areas 51 are cut off, the cutting blade assembly 10 may cut off a portion at the position of the second cutting reference 5b such that the shape of the edge at the position is changed, or interference with the second cutting reference 5b may not be changed during the cutting process such that the shape of the edge at the position is not changed.

In the above technical solutions, in the process of the cutting blade assembly 10 cutting the plurality of second long-strip-shaped areas 52, the position of the cutting blade assembly 10 is set such that the first side edge of the cutting blade assembly 10 is aligned between the first reference line L1 and the second reference line L2, or is aligned with the first reference line L1, and the second side edge of the cutting blade assembly 10 is aligned with a third reference line L3, so as to achieve effective control on the length of burrs at the position of the first cutting reference 5a and the second cutting reference 5b.

It can be understood that the first predetermined value a and the second predetermined value b can be specifically set according to the length requirements of the burrs. For example, if the length of the burrs does not exceed 2 mm, the first predetermined value a and the second predetermined value b can both be less than or equal to 2 mm.

The following description is made by taking the case that the first cutter 11 cuts the plurality of first long-strip-shaped areas 51 and the second cutter 12 cuts the plurality of second long-strip-shaped areas 52 as an example. After reading the following description, those skilled in the art can easily understand the embodiments in which the first cutter 11 cuts the plurality of first long-strip-shaped areas 51 and the plurality of second long-strip-shaped areas 52.

As shown in FIGs. 8-11, the cutting area 3321 is substantially a square area. The first cutting reference 5a and the second cutting reference 5b are perpendicular to each other. In the cutting area 3321, an edge opposite to the first cutting reference 5a and an edge opposite to the second cutting reference 5b are edges of free ends, respectively. The first cutting reference 5a extends in the left-right direction, and the second cutting reference 5b extends in the front-rear direction.

When the first cutter 11 cuts the plurality of first long-strip-shaped areas 51, the front side edge of the first blade 111 on the frontmost side of the plurality of first blades 111 is aligned with the second cutting reference 5b, and free ends of the plurality of first blades 111 in the length direction are aligned with the first cutting reference 5a in the left-right direction to cut off the plurality of first long-strip-shaped areas 51. After the plurality of first long-strip-shaped areas 51 are cut, a width side of the second cutter 12 corresponding to the second blade 121 may be aligned with the first reference line L1, and the free end of the second blade 121 in the length direction may be aligned with the second reference line L2 to cut the plurality of second long-strip-shaped areas 52 simultaneously. Certainly, the first predetermined value and the second predetermined value are related to the product burr length after the cutting area 3321 is cut.

Referring to FIGs. 10 and 11, in some embodiments, each second long-strip-shaped area 52 includes a first sub-area 521 and a second sub-area 522 which are sequentially disposed in the length direction thereof. The second sub-area 522 is located between the first cutting reference 5a and the first reference line L1, that is, the edges on two opposite sides of the second sub-area 522 are located on the first cutting reference 5a and the first reference line L1, respectively. The diameter d2 of the circumscribed circle of the projection of the second sub-area 522 in the stacking direction is ≤ 2 mm, and the stacking direction is perpendicular to the first direction and the second direction, separately; and/or, a is ≤ 2 mm; and/or, b is ≤ 2 mm.

In the above technical solutions, the diameter d2 of the circumscribed circle of the projection of the second sub-area 522 in the third direction is set to be ≤ 2 mm, and/or, a is set to be ≤ 2 mm, and/or, b is set to be ≤ 2 mm, so as to effectively control the dimension of the portion of the second sub-area 522 that remains on the member to be cut, that is, to effectively control the length of burrs after cutting. Even if the entire second sub-area 522 remains on the member to be cut, the risk of short-circuiting caused by folding of the portion corresponding to the second sub-area 522 can be reduced.

For example, d2 is 2 mm, 1.73 mm, 1.5 mm, 1.2 mm, 1 mm, 0.9 mm, or the like; a is 2 mm, 1.8 mm, 1.5 mm, 1.3 mm, 1 mm, 0.8 mm, or the like; b is 2 mm, 1.9 mm, 1.5 mm, 1.2 mm, 1 mm, 0.9 mm, or the like. In addition, a and b may also be 0.

It can be understood that the electrode assembly 30 in the embodiments of the present application can be processed by using the processing method in the embodiments of the present application. The processing method in the embodiments of the present application can be implemented by using the cutting blade assembly 10 in the embodiments of the present application.

It can be seen that in the embodiments of the present application, the plurality of connecting sheets 33 are cut to form the tab part 32 to reduce the area of the misalignment area of the plurality of tab plates 320, and meanwhile, the connection reliability between the tab part 32 and the active substance-coated part 31 and the current passage capacity can be improved by using the remaining misalignment area portion after the process of cutting, and the adverse effect of excessive misalignment of the tab plates 320 on the subsequent procedure can be reduced.

It can be understood that when the tab part 32 is cut by adopting the above processing method, if the second connecting part 3222 is formed with a saw-toothed structure 32b, the first cutting reference 5a is provided corresponding to the second connecting part 3222, and the second cutting reference 5b is provided corresponding to the first connecting part 3221. In this case, the first cutting reference 5a may be the edge of the second connecting part 3222 distal to the overlapping area 321, or the first cutting reference 5a may be spaced apart from the above edge of the second connecting part 3222 (as shown in FIG. 6). For example, the distance between the first cutting reference 5a and the edge of the second connecting part 3222 is less than or equal to 1 mm; for example, the distance may be 0.9 mm, 0.94 mm, 0.98 mm, or the like. If the first connecting part 3221 is formed with a saw-toothed structure 32b, the first cutting reference 5a is provided corresponding to the first connecting part 3221, and the second cutting reference 5b is provided corresponding to the second connecting part 3222. In this case, the first cutting reference 5a may be an edge of the first connecting part 3221 distal to the active substance-coated part 31, or the first cutting reference 5a may be spaced apart from the above edge of the first connecting part 3221.

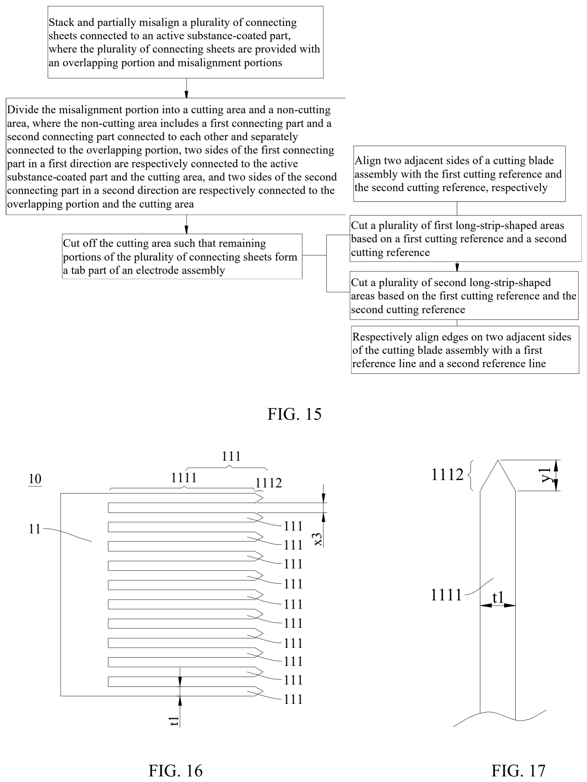

In a sixth aspect, the embodiments of the present application provide a cutting blade assembly. Referring to FIGs. 16-20, the cutting blade assembly 10 is configured to cut the cutting area 3321 of the member to be cut to obtain the electrode assembly 30.

The member to be cut includes an active substance-coated part 31 and a part to be cut. The part to be cut is connected to the active substance-coated part 31, and the part to be cut includes a plurality of connecting sheets 33 stacked and connected to each other. The plurality of connecting sheets 33 are partially disposed in a misaligned manner, such that the plurality of connecting sheets 33 are provided with an overlapping portion 331 and misalignment portions 332. The overlapping portion 331 of the plurality of connecting sheets 33 forms an overlapping area 321, and each of the misalignment portions 332 of the plurality of connecting sheets 33 includes a cutting area 3321 and a non-cutting area 3322, where the non-cutting area 3322 includes a first connecting part 3221 and a second connecting part 3222 connected to each other and separately connected to the overlapping portion 331, two sides of the first connecting part 3221 in a first direction are respectively connected to the active substance-coated part 31 and the cutting area 3321, two sides of the second connecting part 3222 in a second direction are respectively connected to the overlapping portion 331 and the cutting area 3321, and the second direction intersects with the first direction.

The cutting blade assembly 10 includes a first cutter 11. The first cutter 11 includes a plurality of first blades 111 spaced apart from each other in the first direction, and each first blade 111 extends in the second direction. The first cutter 11 is configured to cut off at least a portion of the cutting area 3321, such that the remaining portions of the plurality of connecting sheets 33 form the tab part 32. In this way, the tab part 32 and the active substance-coated part 31 form the electrode assembly 30.

It can be seen that in the process of the cutting blade assembly 10 cutting the member to be cut to obtain the electrode assembly 30, the entire cutting area 3321 may be cut off by the first cutter 11, or a portion of the cutting area 3321 may be cut off by the first cutter 11, and another portion of the cutting area 3321 may be cut off by other portions of the cutting blade assembly 10 (for example, the second cutter 12 described below).

In the above technical solutions, the first cutter 11 is provided to include a plurality of first blades 111 spaced apart from each other, the first cutter 11 is configured to cut at least a portion of the cutting area 3321, and the cutting blade assembly 10 is configured to cut off the cutting area 3321, such that in the second direction, the end of the second connecting part 3222 distal to the overlapping area 321 is closer to the overlapping area 321 than the end of the first connecting part 3221 distal to the overlapping area 321. In this way, the penetration convenience of the tab part 32 is improved, and the connection area between the tab part 32 and the active substance-coated part 31 is increased, thereby facilitating both the improvement of the assembly efficiency of the battery cell 100 and the improvement of the current passage capacity.

In addition, regardless of whether the first cutter 11 is adopted to cut off the entire cutting area 3321 or the first cutter 11 is adopted to cut off a portion of the cutting area 3321, the entire cutting area 3321 needs to be cut off through multiple cutting operations. Since the first cutter 11 includes a plurality of first blades 111 spaced apart from each other, the problem of elongated burrs at the cut edge is alleviated.

For example, when the first cutter 11 is configured to cut the cutting area 3321, the first cutter 11 may punch the cutting area 3321 in a direction perpendicular to the cutting area 3321. For example, if the first cutter 11 punches in the thickness direction of the member to be cut, the portion of the cutting area 3321 aligned with each first blade 111 is punched by the first cutter 11, while the portion of the cutting area 3321 aligned with the gap between two adjacent first blades 111 is not punched by the first cutter 11, such that after the first cutter 11 performs one punch on the cutting area 3321, a portion of the cutting area 3321 may be cut off. In this case, the cut portion may include a plurality of first long-strip-shaped areas 51 spaced apart from each other in the first direction, and the remaining portions of the cutting area 3321 may include a plurality of second long-strip-shaped areas 52 spaced apart from each other in the first direction. Then, the cutting blade assembly 10 may be adopted to cut the remaining portions of the cutting area 3321, so as to cut off at least a portion of each second long-strip-shaped area 52. This effectively shortens the length of the burrs after the member to be cut is cut, and thus the problem that the elongated burrs are easily generated after the member to be cut is cut is effectively alleviated, and the problem that the member to be cut cannot be used normally because the elongated burrs fall into or extend into other positions can be alleviated to a certain extent. The direction perpendicular to the cutting area 3321 may be perpendicular to the first direction and the second direction, separately.

For example, the member to be cut is a tab, and in some techniques, a flat blade is adopted to cut the tab. Because there is a certain blade clearance of the flat blade, it is easy to produce elongated burrs during cutting, such that the elongated burrs can easily extend into the electrode assembly of the battery cell subsequently, which is easy to cause the risk of short-circuiting of the electrode plate. Moreover, the blade clearance of the flat blade will gradually increase during use, so that it is easier to produce elongated burrs during cutting. In the embodiments of the present application, the cutting blade assembly 10 is provided to include a first cutter 11. The first cutter 11 includes a plurality of first blades 111 spaced apart from each other in the first direction, and each first blade 111 extends in the second direction. The plurality of first long-strip-shaped areas 51 and the plurality of second long-strip-shaped areas 52 of the area to be cut 3321 can be sequentially cut, so as to effectively shorten the lengths of the portions of the plurality of second long-strip-shaped areas 52 remaining on the member to be cut, thereby reducing the length of the burrs during the process of cutting the tab part 32, and effectively reducing the risk of short-circuiting of the electrode plate caused by the elongated burrs easily extending into the electrode assembly. Therefore, the reliability and the safety of the electrode assembly are improved.

Illustratively, the first direction is perpendicular to the second direction, and the first cutter 11 punches the cutting area 3321 in the direction perpendicular to the cutting area 3321 to cut off a portion of the cutting area 3321. In this case, the cut portion may include a plurality of first long-strip-shaped areas 51 spaced apart from each other, and the remaining portion of the cutting area 3321 is a plurality of second long-strip-shaped areas 52 spaced apart from each other. Then, the first cutter 11 may be used again to cut the remaining portion of the cutting area 3321, so as to cut off the plurality of second long-strip-shaped areas 52. Certainly, in the above second cutting operation, the placement posture of the first cutter 11 needs to be adjusted. For example, two adjacent cutting references of the cutting area 3321 are respectively the first cutting reference 5a and the second cutting reference 5b, and the two cutting references are perpendicular to each other. When the first cutter 11 performs the first cutting operation, the end portions of the plurality of first blades 111 may correspond to the first cutting reference 5a. The plurality of first blades 111 may be spaced apart from each other in the front-rear direction, and each first blade 111 extends in the left-right direction. When the first cutter 11 performs the second cutting operation, the end portions of the plurality of first blades 111 may correspond to the second cutting reference 5b. The plurality of first blades 111 are spaced apart from each other in the left-right direction, and each first blade 111 extends in the front-rear direction, that is, the first cutter 11 may rotate by 90° around the vertical direction. It can be seen that the above configuration can effectively control at least the length of the burrs at the first cutting reference 5a.

Certainly, the two adjacent cutting references of the cutting area 3321 may also form an acute angle or an obtuse angle, and the first cutter 11 may rotate by a corresponding angle around the vertical direction during the two cutting operations.

Certainly, in other examples, after the first cutter 11 sequentially cuts the cutting area 3321, other components of the cutting blade assembly 10 other than the first cutter 11, such as the second cutter 12 described below, may also be adopted to cut the cutting area 3321 again, which is not limited to using the first cutter 11 to cut all the time. That is, in the whole process of cutting the cutting area 3321, the first cutter 11 may be adopted to cut the cutting area 3321 all the time, or the first cutter 11 may cooperate with other cutting members of the cutting blade assembly 10 to cut the cutting area 3321. In addition, the included angle between the first direction and the second direction may also be any non-zero angle other than 90°.

It can be understood that when the first cutter 11 cuts the cutting area 3321, at least a portion of all the first blades 111 in the first cutter 11 is adopted to implement the cutting operation. In the embodiments of the present application, the cutting blade assembly 10 performs a minimum of two cutting operations on the cutting area 3321. In the following description of the present application, in order to simplify the description, an example in which the cutting blade assembly 10 performs two cutting operations on the cutting area 3321 is used for description. Those skilled in the art, after reading the following solutions, can easily understand the embodiments in which the cutting blade assembly 10 performs more than two cutting operations on the cutting area 3321.

In the above technical solutions, the cutting blade assembly 10 is provided to include the first cutter 11. The first cutter 11 includes a plurality of first blades 111 spaced apart from each other in the first direction, and each first blade 111 extends in the second direction, so as to perform multiple cutting operations on the cutting area 3321 by using the cutting blade assembly 10. In the two adjacent cutting processes, the second cutting operation may shorten the length of the portion of the long-strip-shaped portion which is not cut off in the first cutting operation and is retained on the member to be cut. In this way, the length of the burrs after the member to be cut is cut off is effectively shortened, and the problem that the elongated burrs are easily generated after the member to be cut is cut off is effectively alleviated, so as to alleviate to a certain extent the problem that the member to be cut cannot be used normally because the elongated burrs fall into or extend into other positions. Therefore, the reliability of the product is improved.

Referring to FIGs. 16-19, in some embodiments, the cutting area 3321 includes a plurality of first long-strip-shaped areas 51 and a plurality of second long-strip-shaped areas 52. The plurality of first long-strip-shaped areas 51 and the plurality of second long-strip-shaped areas 52 are alternately disposed in the first direction, and the first long-strip-shaped areas 51 and the second long-strip-shaped areas 52 extend in the second direction. The first blade 111 is configured to cut off the first long-strip-shaped area 51 and the second long-strip-shaped area 52 successively to form the tab part 32. The first blade 111 includes a first cutting part 1111 and a first serrated part 1112 sequentially disposed in the second direction. The first serrated parts 1112 of the plurality of first blades 111 are located at the same ends of the plurality of first blades 111 in the second direction, and the ends of the plurality of first cutting parts 1111 distal to the first serrated parts 1112 are fixedly connected.

For example, the first direction is perpendicular to the second direction, the first cutter 11 firstly punches the plurality of first long-strip-shaped areas 51 in the direction perpendicular to the cutting area 3321, so as to cut off the plurality of first long-strip-shaped areas 51; and then the first cutter 11 is used again to punch and cut the plurality of second long-strip-shaped areas 52, so as to cut off the entire cutting area 3321. Certainly, during the above second cutting operation, the placement posture of the first cutter 11 needs to be adjusted. For example, when the first cutter 11 performs the first cutting operation, the plurality of first blades 111 extend in the second direction, and when the first cutter 11 performs the second cutting operation, the plurality of first blades 111 are adjusted to extend in the first direction, that is, the first cutter 11 can rotate by 90° around the vertical direction. During the second cutting operation, the outermost first blade 111 may be adaptively disposed to correspond to the ends of the plurality of second long-strip-shaped areas 52 connected to the overlapping area 321, so as to cut off the plurality of second long-strip-shaped areas 52 simultaneously by using at least one first blade 111.

It can be seen that the first serrated part 1112 is located at a free end of the first blade 111. When the first blade 111 is configured to cut, the first cutting part 1111 and the first serrated part 1112 may cut different portions. For example, the second direction is a left-right direction. For each first blade 111, the first serrated part 1112 is located at the right end of the first blade 111. At this time, the left ends of the plurality of first blades 111 are fixedly connected, such that the plurality of first blades 111 are connected to form an integral structure, so as to achieve synchronous cutting of the plurality of first blades 111. Certainly, the first serrated part 1112 may also be located at the left end of the first blade 111.

In the above technical solutions, the first blade 111 is provided to include the first cutting part 1111 and the first serrated part 1112, the plurality of first serrated parts 1112 are located at the same ends of the plurality of first blades 111, and the ends of the plurality of first cutting parts 1111 distal to the first serrated parts 1112 are fixedly connected, so as to achieve the synchronous cutting of the plurality of first long-strip-shaped areas 51 by the plurality of first blades 111 and the synchronous cutting of the plurality of second long-strip-shaped areas 52 by the at least one first blade 111. In this way, the cutting of the entire cutting area 3321 can be facilitated by the first cutter 11, and the structure of the cutting blade assembly 10 can be simplified.

For example, the plurality of first serrated parts 1112 may be located on the same straight line extending in the first direction, so as to allow the first cutter 11 to better adapt to the cutting area 3321 whose cutting reference is a straight line. In this case, when the first cutter 11 cuts the cutting area 3321, the first serrated parts 1112 are adapted to be aligned with one of the cutting references in the cutting area 3321. Certainly, in other examples, the plurality of first serrated parts 1112 may also be located on the same curve.

For example, the position of at least one of all the first blades 111 of the first cutter 11 in the second direction is adjustable, so as to achieve the adjustment of the relative positions of the plurality of first serrated parts 1112 in the second direction, such that the first cutter 11 better adapts to the cutting areas 3321 of different shapes, and the applicability of the first cutter 11 is improved.

Referring to FIGs. 16 and 17, in some embodiments, the distance x3 between two adjacent first serrated parts 1112 is ≤ 2 mm, and x3 is also the distance between two adjacent first blades 111; and/or, the length y1 of the first serrated part 1112 in the second direction is ≤ 2 mm.

For example, x3 may be 0.9 mm, 1 mm, 1.2 mm, 1.5 mm, 2 mm, or the like; y1 may be 2 mm, 1.8 mm, 1.6 mm, 1.3 mm, 1 mm, 0.9 mm, or the like.

In the above technical solutions, the distance x3 between two adjacent first serrated parts 1112 is set to be ≤ 2 mm, and/or, the length y1 of the first serrated part 1112 in the second direction is set to be ≤ 2 mm, such that when the cutting blade assembly 10 cuts the plurality of second long-strip-shaped areas 52, an appropriate cutting position can be selected based on a previous cutting position of the first serrated part 1112. However, the distance x3 between two adjacent first serrated parts 1112 and the length y1 of the first serrated part 1112 in the second direction both affect the dimension of the portion of the second long-strip-shaped area 52 remaining on the member to be cut, so as to achieve effective control on the dimension of the portion of the second long-strip-shaped area 52 remaining on the member to be cut. Therefore, the length of the burrs generated after the cutting blade assembly 10 cuts the cutting area 3321 is effectively controlled, and the length of the burrs can be controlled within a reasonable range, thereby further improving the reliability and the safety of the product.

It can be understood that, in the embodiments of the present application, in the case that the first cutter 11 cuts the cutting area 3321, the distance between two adjacent first serrated parts 1112 corresponds to the width of the root position of the second long-strip-shaped area 52 in the first direction; and in the case that the dimension of the cutting area 3321 is fixed, the width of the root position of the second long-strip-shaped area 52 in the first direction and the length of the second long-strip-shaped area 52 in the second direction both affect the dimension of the portion of the second long-strip-shaped area 52 remaining on the member to be cut, that is, affect the length of burrs.

For example, when the cutting blade assembly 10 cuts the plurality of second long-strip-shaped areas 52 of the cutting area 3321, the cutting position may take the cutting position of the first serrated part 1112 in the last cutting process as a reference. For example, the cutting position may select a first extreme cutting position corresponding to the end of the first serrated part 1112 connected to the first cutting part 1111; or the cutting position may select a second extreme cutting position corresponding to the end of the first serrated part 1112 distal to the first cutting part 1111, or the cutting position may select any position between the first extreme cutting position and the second extreme cutting position, and the length of the portion of the second long-strip-shaped area 52 retained on the member to be cut is related to the cutting position. For this reason, the above technical solutions achieve effective control on the length of the burrs by reasonably setting the dimension and the arrangement distance of the first serrated parts 1112.

In addition, when the first cutter 11 is adopted to cut the second long-strip-shaped area 52, the first serrated part 1112 may correspond to the second cutting reference 5b. In this case, at least a portion of the first serrated part 1112 may extend beyond the second cutting reference 5b to cut the first groove 3220. In the above technical solutions of the present application, the length of the first serrated part 1112 may be set to be not greater than 2 mm to control the dimension of the first groove 3220, thereby controlling the length of the burrs at the position of the second cutting reference 5b, that is, controlling the length of the burrs retained on the member to be cut and located at the position of the second cutting reference 5b. Similarly, the process of cutting and forming the second groove is similar to the process of cutting and forming the first groove, and details are not described herein again.

Referring to FIGs. 16-19, in some embodiments, the first serrated part 1112 is a triangle, and the maximum thickness t1 of the first blade 111 is ≤ 1 mm. For example, t1 may be 1 mm, 0.9 mm, 0.8 mm, or the like. Or, the first serrated part 1112 is a square, and the maximum thickness t2 of the first blade 111 is ≤ 0.71 mm. For example, t2 may be 0.71 mm, 0.6 mm, 0.55 mm, or the like. Or, the first serrated part 1112 is a trapezoid, and the maximum thickness t3 of the first blade 111 is ≤ 1 mm. For example, t3 may be 1 mm, 0.95 mm, 0.8 mm, or the like. Then, for the above embodiments, the maximum thickness of the first serrated part 1112 is the maximum thickness of the first blade 111.

It can be understood that, in the embodiments of the present application, in the case that the first cutter 11 cuts the cutting area 3321, the thickness of the first blade 111 corresponds to the width of the first long-strip-shaped area 51 in the first direction, or corresponds to the distance between two adjacent second long-strip-shaped areas 52 in the first direction.

In the above technical solutions, the maximum thickness of the first blade 111 is set when the first serrated part 1112 has different shape structures, such that the thickness of the first blade 111 well matches the shape of the first serrated part 1112. In this way, the first blade 111 has a proper cutting capability, and the cutting reliability and the accuracy of controlling the cutting dimension of the first blade 111 are improved. Certainly, the first serrated part 1112 may correspond to a recess between two adjacent protrusions 2a of the saw-toothed structure 2b at the cutting position.

For example, the first cutting part 1111 has auniform-thickness structure, and the thickness of the first serrated part 1112 is reduced or unchanged in the direction away from the first cutting part 1111. In this case, the maximum thickness of the first serrated part 1112 is equal to the thickness of the first cutting part 1111. It can be seen that when the first serrated part 1112 and the first cutting part 1111 both have a uniform-thickness structure, the thicknesses of the two parts are equal, and both the thicknesses of the first serrated part 1112 and the first cutting part 1111 may be the maximum thickness of the first blade 111. When the first cutting part 1111 has a uniform-thickness structure and the thickness of the first serrated part 1112 decreases in the direction of the first cutting part 1111, both the maximum thickness of the first serrated part 1112 and the thickness of the first cutting part 1111 are the maximum thickness of the first blade 111.

Referring to FIGs. 8-11 and 20, in some embodiments, the cutting area 3321 includes a plurality of first long-strip-shaped areas 51 and a plurality of second long-strip-shaped areas 52. The plurality of first long-strip-shaped areas 51 and the plurality of second long-strip-shaped areas 52 are alternately disposed one by one in the first direction. The first long-strip-shaped areas 51 and the second long-strip-shaped areas 52 extend in the second direction. The first cutter 11 is configured to cut the plurality of first long-strip-shaped areas 51. The cutting blade assembly 10 further includes a second cutter 12. The second cutter 12 includes at least one second blade 121 extending in the first direction. The second blade 121 may extend in an elongated strip shape. The second cutter 12 is configured to cut the plurality of second long-strip-shaped areas 52.

In the above technical solutions, the cutting blade assembly 10 is provided to further include a second cutter 12, and the first cutter 11 and the second cutter 12 separately cut different areas of the cutting area 3321, such that the cutting control of the first cutter 11 and the second cutter 12 can be simplified. In this way, it is convenient for the first cutter 11 to keep the same posture for cutting and the second cutter 12 to keep the same posture for cutting. Then, the first blade 111 extends in a certain fixed direction, the second blade 121 extends in a certain fixed direction, and the extending direction of the first blade 111 intersects with the extending direction of the second blade 121. In this case, there is no need to frequently adjust the placement postures of the first cutter 11 and the second cutter 12 when cutting, and only the corresponding cutters need to be replaced, which facilitates the simplification of the cutting process.

For example, the first cutter 11 maintains a fixed posture to punch the first long-strip-shaped area 51, so as to cut off the corresponding portions of the plurality of first long-strip-shaped areas 51; and then the second cutter 12 maintains a fixed posture to cut off the remaining second long-strip-shaped areas 52, so as to cut off the entire second long-strip-shaped areas 52. It can be seen that two successive cutting operations are performed on the cutting area 3321, while different cutting paths and different cutting positions are adopted for the successive two-side cutting operations. In the embodiments of the present application, different cutters are adopted to achieve the above successive two-side cutting operations, such that the cutting posture of the cutting blade assembly 10 does not need to be frequently adjusted, thereby simplifying the cutting operation.

Illustratively, when the second cutter 12 cuts the second area, the cutting position of the second cutter 12 may take the cutting position of the first serrated part 1112 during the last cutting process of the first cutter 11 as a reference. For example, the cutting position of the second cutter 12 may select a first extreme cutting position corresponding to the end of the first serrated part 1112 connected to the first cutting part 1111, or the cutting position of the second cutter 12 may select a second extreme cutting position corresponding to the end of the first serrated part 1112 distal to the first cutting part 1111, or the cutting position of the second cutter 12 may select any position between the first extreme cutting position and the second extreme cutting position. Taking the cutting position of the second cutter 12 as the first extreme cutting position as an example, the thickness side surface of the second cutter 12 distal to the free end of the second long-strip portion may be aligned with the first extreme cutting position of the plurality of first serrated parts 1112, and the cutting is performed in the direction perpendicular to the cutting area 3321.

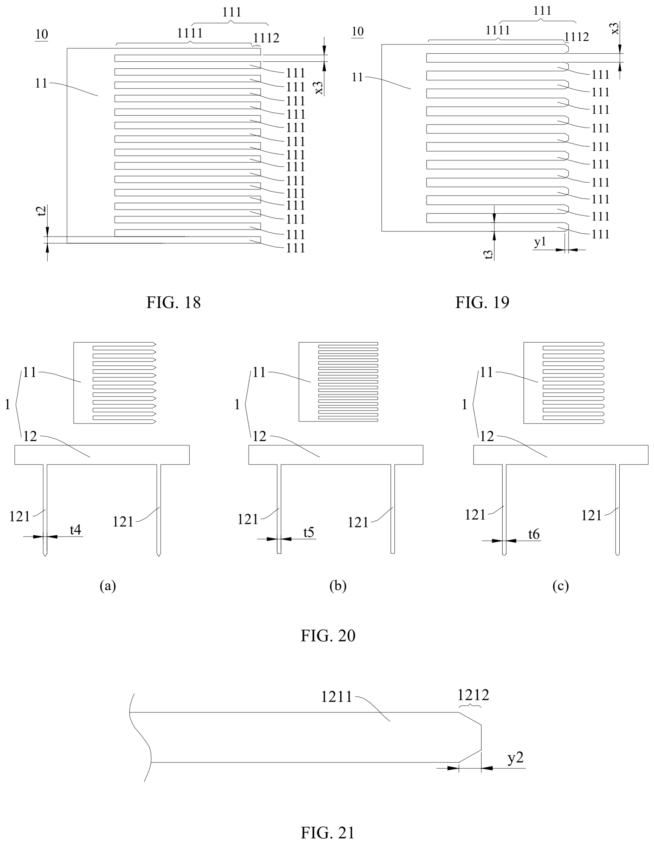

Referring to FIGs. 20, in some embodiments, the second cutter 12 includes two blade sets spaced apart from each other in the second direction. Each blade set includes at least one second blade 121, and the two blade sets are respectively configured to cut the second long-strip-shaped areas 52 on two sides of the overlapping area 321 in the second direction.

It can be understood that when the second cutter 12 includes a plurality of second blades 121, in one cutting process, the second cutter 12 may be configured to cut the cutting areas on two opposite sides of the overlapping area 321 simultaneously, that is, one blade set cuts off the cutting area on one side of the overlapping area 321, and the other blade set cuts off the cutting area on the other side of the overlapping area 321.

For example, as shown in FIGs. 8-11 and 20, the second cutter 12 includes two blade sets. Each blade set includes one second blade 121. Two opposite sides of the member to be cut in the second direction are each provided with one cutting area. After the first cutter 11 sequentially cuts the two cutting areas, one second blade 121 may be aligned with a cutting position required by one of the cutting areas, and the other second blade 121 is aligned with a cutting position required by the other cutting area, such that the second cutter 12 simultaneously cuts the two cutting areas twice. In other examples, the second cutter 12 includes two second blades 121, and the two second blades 121 are configured to cut one cutting area. In this case, one of the first blades 121 may be adopted to cut corresponding to the cutting reference. For example, the second cutter 12 on the left side in FIG. 17 is configured to cut a plurality of second long-strip-shaped areas 52 in the leftmost cutting area, and the second cutter 12 may be moved to the left until the second blade 121 on the right side is aligned with the cutting positions required by the plurality of second long-strip-shaped areas 52. Certainly, the second cutter 12 can also be configured to cut more than two cutting areas.

In the above technical solutions, the second cutter 12 is provided to include two blade sets and be respectively configured to cut the second long-strip-shaped areas 52 on two sides of the overlapping area 321 in the second direction. In this case, the two blade sets are respectively configured to cut the cutting areas 3321 on two sides of the overlapping area 321 in the second direction, so as to synchronously cut the cutting areas 3321 on two sides of the overlapping area 321, thereby improving the processing efficiency of the electrode assembly 30.

Certainly, in other examples, the second cutter 12 may further include one second blade 121.

In some embodiments, the distance between the two blade sets is adjustable.

In the above technical solutions, by setting the distance between the two blade sets to be adjustable, it is convenient for the second cutter 12 to adapt to the different distances between the two cutting areas 3321, i.e., to the tab parts 32 of different dimensions, when cutting the two cutting areas 3321 simultaneously, no matter for the same member to be cut or for different members to be cut, so as to improve the operability and applicability of the second cutter 12 in cutting the two cutting areas 3321 simultaneously.

Illustratively, the second cutter 12 includes two blade sets, and two opposite sides of the member to be cut are each provided with one cutting area 3321. For members to be cut with different specifications, the distance between the cutting areas 3321 on the two opposite sides is not equal, and the distance between the two blade sets is adjustable to adapt to the change of the distance between the two cutting areas 3321, thereby improving the applicability of the second cutter 12.

Referring to FIGs. 20 and 21, in some embodiments, each second blade 121 includes a second cutting part 1211 and a second serrated part 1212 sequentially disposed in the first direction. The length y2 of the second serrated part 1212 in the first direction is ≤ 2 mm.

In the above technical solutions, the second blade 121 is provided to include a second cutting part 1211 and a second serrated part 1212, and the length y2 of the second serrated part 1212 in the first direction is ≤ 2 mm. In this case, when the second cutter 12 cuts the plurality of second long-strip-shaped areas 52, the cutting position of the second cutter 12 in the second direction can be selected based on the previous cutting position of the first serrated part 1112, and the cutting position of the second cutter 12 in the first direction can be selected based on the relative position between the second serrated part 1212 and the second cutting reference 5b. If at least a portion of the second serrated part 1212 extends beyond the second cutting reference 5b to form the first groove 3220 on the second cutting reference 5b, the dimension of the first groove 3220 can be controlled, so as to control the length of the burrs at the position of the second cutting reference 5b.

It can be understood that, when a plurality of second blades 121 are provided, the second serrated parts 1212 of the plurality of second blades 121 are located at the same ends of the plurality of second blades 121 in the first direction, such that the ends of the plurality of second cutting parts 1211 distal to the second serrated parts 1212 can be fixedly connected. In this way, the plurality of second blades 121 are connected to form an integral structure, so as to implement synchronous cutting of the plurality of second blades 121.

Illustratively, when the second cutter 12 includes a plurality of second blades 121 spaced apart from each other in the second direction, the plurality of second serrated parts 1212 may be located on the same straight line extending in the second direction, so as to allow the second cutter 12 to better adapt to the cutting area 3321 whose cutting reference is a straight line. In this case, when the second cutter 12 cuts the cutting area 3321, the second serrated part 1212 is adapted to be aligned with one of the cutting references of the cutting area 3321. Certainly, in other examples, the plurality of second serrated parts 1212 may also be located on the same curve.

For example, the position of at least one of all the second blades 121 of the first cutter 11 in the first direction is adjustable, so as to achieve the adjustment of the relative positions of the plurality of second serrated parts 1212 in the first direction, such that the second cutter 12 better adapts to the cutting areas 3321 of different shapes, and the applicability of the second cutter 12 is improved.

For example, when the first blade 111 includes a first cutting part 1111 and a first serrated part 1112, and the second blade 121 includes a second cutting part 1211 and a second serrated part 1212, the shape of the second serrated part 1212 may be the same as or different from the shape of the first serrated part 1112. Illustratively, both the second serrated part 1212 and the first serrated part 1112 are formed in a triangle, a square or a trapezoid. Certainly, in some other examples, the first serrated part 1112 is formed in a triangle, and the second serrated part 1212 is formed in a square or a trapezoid.

Referring to FIGs. 20 and 21, in some embodiments, the second cutting part 1211 has a uniform-thickness structure, and the thickness of the second cutting part 1211 decreases or remains unchanged in the direction away from the second cutting part 1211. In this case, the maximum thickness of the second serrated part 1212 is equal to the thickness of the second cutting part 1211.

It can be seen that when the second serrated part 1212 and the second cutting part 1211 both have a uniform-thickness structure, the thicknesses of the two parts are equal, and both the thicknesses of the second serrated part 1212 and the second cutting part 1211 may be the maximum thickness of the second blade 121. When the second cutting part 1211 has a uniform-thickness structure and the thickness of the second serrated part 1212 decreases in the direction of the second cutting part 1211, both the maximum thickness of the second serrated part 1212 and the thickness of the second cutting part 1211 are the maximum thickness of the second blade 121.

The second serrated part 1212 is a triangle, and the maximum thickness t4 of the second blade 121 is ≤ 1 mm; or the second serrated part 1212 is a square, and the maximum thickness t5 of the second blade 121 is ≤ 0.71 mm; or the second serrated part 1212 is a trapezoid, and the maximum thickness t6 of the second blade 121 is ≤ 1 mm. Then, for the above embodiments, the maximum thickness of the second serrated part 1212 is the maximum thickness of the second blade 121.

In the above technical solutions, the maximum thickness of the second blade 121 is set when the second serrated part 1212 has different shape structures, such that the thickness of the second blade 121 well matches the shape of the second serrated part 1212. In this way, the second blade 121 has a proper cutting capability, and the cutting reliability and the accuracy of controlling the cutting dimension of the second blade 121 are improved.

For example, the tab plate 320 is a square structure, and the tab plate 320 is provided with two opposite first edges and two opposite second edges. One of the first edges is electrically connected to the current collector 311, at least one of the two second edges is provided with a plurality of first protrusions, and the plurality of protrusions 32a located on the same edge are formed in a saw-toothed structure 32b. For another example, the tab plate 320 is a trapezoidal structure, the bottom edge of the tab plate 320 is electrically connected to the current collector 311, at least one of the edges corresponding to the two waists of the tab plate 320 is provided with a plurality of protrusions 32a, and the plurality of protrusions 32a located on the same edge are formed in a saw-toothed structure 32b.

In the above technical solutions, at least one edge of the tab plate 320 is provided with a plurality of protrusions 32a, and the plurality of protrusions 32a located at the same end are formed in a saw-toothed structure 32b.

It can be understood that the shape of the protrusion 32a is not specifically limited in the embodiments of the present application. For example, the protrusion 32a may be formed in a square, a trapezoid, or the like.

It can be understood that if the protrusion 32a corresponds to the second sub-area 522 in the above cutting method of the present application, then d2 = d1.

Referring to FIGs. 9 and 14-18, the electrode assembly 30, the cutting blade assembly 10, and the cutting method according to the specific embodiments of the present application will be described.

The electrode assembly 30 includes an active substance-coated part 31 and a tab part 32. The tab part 32 includes a plurality of tab plates 320 stacked and connected to each other. An overlapping portion of the plurality of tab plates 320 forms an overlapping area 321, and misalignment portions of the plurality of tab plates 320 form misalignment areas 322 connected to the overlapping area 321. There are two misalignment areas 322, and the two misalignment areas 322 are respectively located on two sides of the overlapping area 321 in the second direction. Each misalignment area 322 includes a first connecting part 3221 and a second connecting part 3222. One side of the first connecting part 3221 in the first direction is connected to the active substance-coated part 31, and the second connecting part 3222 is connected to the other side of the first connecting part 3221 in the first direction. In the second direction, the end of the second connecting part 3222 distal to the overlapping area 321 is closer to the overlapping area 321 than the end of the first connecting part 3221 distal to the overlapping area 321, and the second direction is perpendicular to the first direction. An edge at the end of the second connecting part 3222 distal to the overlapping area 321 forms a saw-toothed structure 32b, a first groove 3220 is formed in a position of the first connecting part 3221 connected to the edge at the end of the second connecting part 3222 distal to the overlapping area 321, and both the saw-toothed structure 32b at the end of the first connecting part 3221 distal to the active substance-coated part 31 and the edge at the end of the second connecting part 3222 distal to the overlapping area 321 are obtained by cutting.

In the embodiments of the present application, the cutting blade assembly 10 includes a first cutter 11 and a second cutter 12. The first cutter 11 includes a plurality of spaced first blades 111 spaced apart from each other in a first direction. Each first blade 111 extends in a second direction, and the first direction intersects with the second direction. The second cutter 12 includes two second blades 121 spaced apart from each other in the second direction. Each first blade 111 includes a first cutting part 1111 and a first serrated part 1112 sequentially disposed in the second direction. The first serrated parts 1112 of the plurality of first blades 111 are located at the same ends of the plurality of first blades 111 in the second direction, and the ends of the plurality of first cutting parts 1111 distal to the first serrated parts 1112 are fixedly connected. Each second blade 121 includes a second cutting part 1211 and a second serrated part 1212 sequentially disposed in the first direction. The second serrated parts 1212 of the plurality of second blades 121 are located at the same ends of the plurality of second blades 121 in the second direction, and the ends of the plurality of second cutting parts 1211 distal to the second serrated parts 1212 are fixedly connected.

The cutting area 3321 is provided with a first cutting reference 5a and a second cutting reference 5b which are adjacent to each other. The first cutting reference 5a extends in the first direction, and the cutting area 3321 includes a plurality of first long-strip-shaped areas 51 and a plurality of second long-strip-shaped areas 52. The plurality of first long-strip-shaped areas 51 and the plurality of second long-strip-shaped areas 52 are alternately disposed one by one in the first direction, and the first long-strip-shaped areas 51 and the second long-strip-shaped areas 52 extend in the second direction. The cutting method includes:
S1, stacking and partially misaligning a plurality of connecting sheets 33 connected to the active substance-coated part 31, where the plurality of connecting sheets 33 are provided with an overlapping portion 331 and misalignment portions 332;
S2, dividing the misalignment portion 332 into a cutting area 3321 and a non-cutting area 3322, where the non-cutting area 3322 includes a first connecting part 3221 and a second connecting part 3222 connected to each other and connected to the overlapping portion, separately, two sides of the first connecting part 3221 in a first direction are respectively connected to the active substance-coated part 31 and the cutting area 3321, and two sides of the second connecting part 3222 in a second direction are respectively connected to the overlapping portion 331 and the cutting area 3321; the misalignment portion 332 is provided with a first cutting reference 5a extending in the first direction and a second cutting reference 5b extending in the second direction, the cutting area 3321 includes a plurality of first long-strip-shaped areas 51 and a plurality of second long-strip-shaped areas 52, where the plurality of first long-strip-shaped areas 51 and the plurality of second long-strip-shaped areas 52 are alternately disposed one by one in the first direction, and the first long-strip-shaped areas 51 and the second long-strip-shaped areas 52 extend in the second direction; and
S3, cutting off the cutting area 3321 such that the remaining portions of the plurality of connecting sheets 33 form the tab part 32 of the electrode assembly 30, including: S31, cutting off the plurality of first long-strip-shaped areas 51 based on the first cutting reference 5a and the second cutting reference 5b, including: aligning two adjacent sides of the cutting blade assembly 10 with the first cutting reference 5a and the second cutting reference 5b, respectively, such that the width side of a first blade 111 on the outermost side of the first cutter 11 facing away from the other first blades 111 is aligned with the second cutting reference 5b, and the end portions of the plurality of first serrated parts 1112 are aligned with the first cutting reference 5a; S32, cutting off the plurality of second long-strip-shaped areas 52 based on the first cutting reference 5a and the second cutting reference 5b, including: respectively aligning the edges on two adjacent sides of the cutting blade assembly 10 with a first reference line L1 and a second reference line L2, where the first reference line L1 corresponds to the inner side of the cutting area and is away from the first cutting reference 5a by a first predetermined value a, the second reference line L2 corresponds to the outer side of the cutting area and is away from the second cutting reference 5b by a second predetermined value b, then one side of each second blade 112 opposite to each other is aligned with the corresponding first cutting reference 5a, and the end portion of the second serrated part 1212 is aligned with the second cutting reference 5b, such that the second serrated part 1212 cuts out the first groove 3220.

In the above technical solutions, the dimensions of the portions retained on the tab part 32 at the first cutting reference 5a and the second cutting reference 5b, i.e., the protrusions 32a, can be effectively reduced, thereby shortening the length of the burrs during the process of cutting the tab part 32, and effectively reducing the risk of short-circuiting of the electrode plate caused by the elongated burrs easily extending into the electrode assembly. Therefore, the reliability and the safety of the electrode assembly are improved, and the first time yield (i.e., FTY) of the product is improved. Moreover, since the edge of the tab part 32 is provided with a protrusion 32a, it is convenient to have a certain tolerance to the cutting gap during the cutting process, which is beneficial to reducing the requirements for the cutting blade assembly 10 and prolonging the service life of the cutting blade assembly 10.

It should be noted that in the absence of conflicts, the embodiments and features in the embodiments in the present application may be combined with each other. The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. An electrode assembly, comprising:
an active substance-coated part; and
a tab part connected to the active substance-coated part, the tab part comprising a plurality of tab plates stacked and connected to each other, an overlapping portion of the plurality of tab plates forming an overlapping area, and misalignment portions of the plurality of tab plates forming misalignment areas connected to the overlapping area;
wherein the misalignment area comprises a first connecting part and a second connecting part, one side of the first connecting part in a first direction is connected to the active substance-coated part, and the second connecting part is connected to the other side of the first connecting part in the first direction; and in a second direction, an end of the second connecting part distal to the overlapping area is closer to the overlapping area than an end of the first connecting part distal to the overlapping area, and the second direction intersects with the first direction.

2. The electrode assembly according to claim 1, wherein
an edge at the end of the second connecting part distal to the overlapping area is of a saw-toothed structure; and/or
an edge at an end of the first connecting part distal to the active substance-coated part is of a saw-toothed structure.

3. The electrode assembly according to claim 2, wherein the saw-toothed structure comprises a plurality of protrusions sequentially disposed in the first direction,
a height h1 of the protrusion is ≤ 2 mm; and/or
a diameter d1 of a circumscribed circle of a projection of the protrusion in a thickness direction of the tab part is ≤ 2 mm.

4. The electrode assembly according to claim 2 or 3, wherein the saw-toothed structure comprises a plurality of protrusions sequentially disposed in the first direction, and the protrusions are squares or trapezoids.

5. The electrode assembly according to any one of claims 2 to 4, wherein
when the edge of the second connecting part is formed with the saw-toothed structure, a first groove is formed at a position of the first connecting part connected to the edge at the end of the second connecting part distal to the overlapping area; or
when the edge of the first connecting part is formed with the saw-toothed structure, a second groove is formed at a position of the second connecting part connected to the edge at the end of the first connecting part distal to the active substance-coated part.

6. The electrode assembly according to any one of claims 2 to 5, wherein at least one of the edge at the end of the first connecting part distal to the active substance-coated part and the edge at the end of the second connecting part distal to the overlapping area is obtained by cutting.

7. The electrode assembly according to any one of claims 1 to 6, wherein two opposite sides of the overlapping area in the second direction are each provided with one of the misalignment areas.

8. The electrode assembly according to any one of claims 1 to 7, wherein the active substance-coated part comprises a positive electrode plate body, a negative electrode plate body, and a separator, the plurality of tab plates are correspondingly connected to the positive electrode plate body and the negative electrode plate body, separately, and the separator is disposed between the positive electrode plate body and the negative electrode plate body and extends beyond the positive electrode plate body and the negative electrode plate body;
wherein at least a portion of the first connecting part is shielded by the separator.

9. A battery cell, comprising a housing, a post terminal, and the electrode assembly according to any one of claims 1 to 8, wherein the post terminal is disposed in the housing, the active substance-coated part is accommodated in the housing, and the tab part is electrically connected to the post terminal.

10. The battery cell according to claim 9, wherein an accommodating groove is formed in the post terminal, a portion of the tab part is accommodated in the accommodating groove, a side of the accommodating groove facing away from the active substance-coated part is open, a groove wall of a side of the accommodating groove facing the active substance-coated part is formed with a perforation communicating with an interior of the housing, and the tab part is disposed in the perforation in a penetrating manner.

11. The battery cell according to claim 10, wherein the battery cell further comprises a post terminal cover plate, the post terminal cover plate being disposed on the post terminal and closing an opening of the accommodating groove.

12. A battery, comprising the battery cell according to any one of claims 9 to 11.

13. An electric device, comprising the battery according to claim 12, wherein the battery is configured to provide electric energy.

14. A method for processing an electrode assembly, comprising:
stacking and partially misaligning a plurality of connecting sheets connected to an active substance-coated part, wherein the plurality of connecting sheets are provided with an overlapping portion and misalignment portions;
dividing the misalignment portion into a cutting area and a non-cutting area, wherein the non-cutting area comprises a first connecting part and a second connecting part connected to each other and separately connected to the overlapping portion, two sides of the first connecting part in a first direction are respectively connected to the active substance-coated part and the cutting area, two sides of the second connecting part in a second direction are respectively connected to the overlapping portion and the cutting area, and the second direction intersects with the first direction; and
cutting off the cutting area such that remaining portions of the plurality of connecting sheets form a tab part of the electrode assembly.

15. The method for processing an electrode assembly according to claim 14, wherein the misalignment portion is provided with a first cutting reference extending in the first direction and a second cutting reference extending in the second direction; the cutting area comprises a plurality of first long-strip-shaped areas and a plurality of second long-strip-shaped areas, the plurality of first long-strip-shaped areas and the plurality of second long-strip-shaped areas are alternately disposed one by one in the first direction or the second direction, and the first long-strip-shaped areas and the second long-strip-shaped areas extend in the second direction or the first direction; and
cutting off the cutting area comprises:
cutting off the plurality of first long-strip-shaped areas based on the first cutting reference and the second cutting reference; and
cutting off the plurality of second long-strip-shaped areas based on the first cutting reference and the second cutting reference.

16. The method for processing an electrode assembly according to claim 15, wherein
cutting off the plurality of first long-strip-shaped areas based on the first cutting reference and the second cutting reference comprises: aligning two adjacent sides of a cutting blade assembly with the first cutting reference and the second cutting reference, respectively; and
cutting off the plurality of second long-strip-shaped areas based on the first cutting reference and the second cutting reference comprises: aligning edges of two adjacent sides of the cutting blade assembly with a first reference line and a second reference line, respectively, wherein the first reference line corresponds to an inner side of the cutting area and is away from the first cutting reference by a first predetermined value a, and the second reference line corresponds to an outer side of the cutting area and is away from the second cutting reference by a second predetermined value b.

17. The method for processing an electrode assembly according to claim 16, wherein each second long-strip-shaped area comprises a first sub-area and a second sub-area sequentially disposed in a length direction thereof, the second sub-area being located between the first cutting reference and the first reference line,
a diameter d2 of a circumscribed circle of a projection of the second sub-area in a stacking direction is ≤ 2 mm, and the stacking direction is perpendicular to the first direction and the second direction, separately; and/or
a is ≤ 2 mm; and/or
b is ≤ 2 mm.

18. A cutting blade assembly, configured to cut a member to be cut to obtain an electrode assembly, wherein the member to be cut comprises an active substance-coated part and a part to be cut, and the part to be cut is connected to the active substance-coated part; the part to be cut comprises a plurality of connecting sheets stacked and connected to each other, an overlapping portion of the plurality of connecting sheets forms an overlapping area, each of misalignment portions of the plurality of connecting sheets comprises a cutting area and a non-cutting area, the non-cutting area comprises a first connecting part and a second connecting part connected to each other and separately connected to the overlapping portion, two sides of the first connecting part in a first direction are respectively connected to the active substance-coated part and the cutting area, two sides of the second connecting part in a second direction are respectively connected to the overlapping portion and the cutting area, and the second direction intersects with the first direction;
the cutting blade assembly comprises:
a first cutter, wherein the first cutter comprises a plurality of first blades spaced apart from each other in the first direction, and each first blade extends in the second direction;
the first cutter is configured to cut off at least a portion of the cutting area to enable remaining portions of the plurality of connecting sheets to form a tab part, such that the tab part and the active substance-coated part form the electrode assembly.

19. The cutting blade assembly according to claim 18, wherein the cutting area comprises a plurality of first long-strip-shaped areas and a plurality of second long-strip-shaped areas, the plurality of first long-strip-shaped areas and the plurality of second long-strip-shaped areas being alternately disposed one by one in the first direction, and the first long-strip-shaped areas and the second long-strip-shaped areas extending in the second direction;
the first blade is configured to cut off the first long-strip-shaped area and the second long-strip-shaped area successively to form the tab part;
wherein the first blade comprises a first cutting part and a first serrated part sequentially disposed in the second direction, the first serrated parts of the plurality of first blades are located at same ends of the plurality of first blades in the second direction, and ends of the plurality of first cutting parts distal to the first serrated parts are fixedly connected.

20. The cutting blade assembly according to claim 19, wherein
a length y1 of the first serrated part in the second direction is ≤ 2 mm; and/or
a distance x3 between two adjacent first serrated parts is ≤ 2 mm.

21. The cutting blade assembly according to claim 19 or claim 20, wherein
the first serrated part is a triangle, and a maximum thickness t1 of the first blade is ≤ 1 mm; or
the first serrated part is a square, and a maximum thickness t2 of the first blade is ≤ 0.71 mm; or
the first serrated part is a trapezoid, and a maximum thickness t3 of the first blade is ≤ 1 mm.

22. The cutting blade assembly according to claim 18, wherein the cutting area comprises a plurality of first long-strip-shaped areas and a plurality of second long-strip-shaped areas, the plurality of first long-strip-shaped areas and the plurality of second long-strip-shaped areas being alternately disposed one by one in the first direction, and the first long-strip-shaped areas and the second long-strip-shaped areas extending in the second direction, the first cutter is configured to cut the plurality of first long-strip-shaped areas, and the cutting blade assembly further comprises:
a second cutter, wherein the second cutter comprises at least one second blade extending in the first direction, and the second cutter is configured to cut the plurality of second long-strip-shaped areas.

23. The cutting blade assembly according to claim 22, wherein the second cutter comprises two blade sets spaced apart from each other in the second direction, each blade set comprises at least one second blade, and the two blade sets are respectively configured to cut the second long-strip-shaped areas on two sides of the overlapping area in the second direction.

24. The cutting blade assembly according to claim 23, wherein a distance between the two blade sets is adjustable.
